(19) Europäisches Patentamt
European Patent Office
Office européen des brevets

(11) **EP 4 593 490 A1**

(12) **EUROPEAN PATENT APPLICATION**
published in accordance with Art. 153(4) EPC

(43) Date of publication:
**30.07.2025 Bulletin 2025/31**

(51) International Patent Classification (IPC):
**H04W 72/0446** (2023.01)

(21) Application number: **23862255.9**

(52) Cooperative Patent Classification (CPC):
**H04W 72/0446; H04W 72/53**

(22) Date of filing: **31.08.2023**

(86) International application number:
**PCT/CN2023/115996**

(87) International publication number:
**WO 2024/051561 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.09.2022 CN 202211092758**

(71) Applicant: **SHANGHAI LANGBO
COMMUNICATION TECHNOLOGY
COMPANY LIMITED
Shanghai 200240 (CN)**

(72) Inventors:
• **WU, Keying
  Shanghai 201206 (CN)**
• **ZHANG, Xiaobo
  Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS FOR NODE IN WIRELESS COMMUNICATION**

(57)     Disclosed in the present application is a method and an apparatus used in a wireless communication node. The first node receives a first information block and a first signaling; receives a first signal in a first time window, or sends the first signal in the first time window. The first information block is used to determine the first time domain resource, and the first signaling comprises scheduling information for the first signal; the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource. The above method optimizes TBS determination, and improves the resource utilization rate and ensuring good compatibility.

FIG. 1

EP 4 593 490 A1

**Description**

**Technical Field**

The present application relates to a transmission method and an apparatus in wireless communication systems, in particular a wireless signal transmission method and an apparatus in a wireless communication system that supports cellular networks.

**Background Art**

In an existing NR (New Radio) system, spectrum resources are statically divided into FDD (Frequency Division Duplexing) spectrum and TDD (Time Division Duplexing) spectrum. For the TDD spectrum, both the base station and the UE (User Equipment) operate in half-duplex mode. This half-duplex mode avoids self-interference and can mitigate the effects of cross-link interference, but it also leads to reduced resource utilization and increased latency. In response to these problems, supporting a flexible duplex mode or variable link direction (uplink, downlink, or flexible) in the TDD or FDD spectrum is a potential solution. At 3GPP (3rd Generation Partnership Project) RAN (Radio Access Network) Meeting #88e and the 3GPP R-18 workshop, supporting more flexible duplex modes or full-duplex modes in NR Release 18 received widespread attention and discussion, particularly the subband non-overlapping full-duplex (SBFD) mode at the gNB (NR Node B) side. Communication in this mode is subject to severe interference, including self-interference and cross-link interference. To address the interference issues, advanced interference cancellation techniques are required, including antenna isolation, beamforming, RF (Radio Frequency) interference cancellation, and digital interference cancellation.

**Summary of Invention**

The applicant has found through its research that in the SBFD scenario, the spectrum allocation for uplink and downlink transmissions will become more flexible, and the interference conditions will also become more complex. At the same time, backward compatibility needs to be taken into account, such as, but not limited to, ensuring the transmission of traditional downlink signals for cell-wide public and/or UE group-wide public use. In this scenario, the existing transmission scheme needs to be reconsidered.

The present application discloses a solution to the above problems. It is to be noted that although the above description uses the SBFD scenario as an example, this application can also be applied to other non-SBFD scenarios. Furthermore, adopting a unified design solution for different scenarios (including but not limited to SBFD, other flexible duplex modes or full-duplex modes, variable link direction modes, and traditional duplex modes) helps reduce hardware complexity and cost. Embodiments of any of the nodes of the present application and the features of the embodiments may be applied to any other node without conflict. The embodiments of the present application and the features in the embodiments may be arbitrarily combined with one another without conflict.

As one embodiment, the terminology in the present application is interpreted with reference to the definitions in the 3GPP TS36 series-specification protocol.

As one embodiment, the terminology in the present application is interpreted with reference to the definitions in the 3GPP TS38 series-specification protocol.

As one embodiment, the terminology in the present application is interpreted with reference to the definitions in the 3GPP TS37 series-specification protocol.

As one embodiment, the terminology in the present application is interpreted with reference to the definitions in the IEEE (Institute of Electrical and Electronics Engineers) specification protocol.

Disclosed in the present application is a method used in a first node for wireless communication, characterized in that, the method comprises:

receiving a first information block and first signaling, where the first information block is used to determine the first time domain resource, and the first signal comprises scheduling information for a first signal;
receiving the first signal in a first time window, or sending the first signal in a first time window;
wherein, the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

As one embodiment, an advantage of the method described above includes: optimizing the determination of the first TBS, while improving resource utilization and ensuring good compatibility.

As one embodiment, an advantage of the method described above includes: improving system performance with minimal changes to the current system.

According to one aspect of the present application, characterized in that, the first information block configures the symbols in the first time domain resource to the first type.

According to one aspect of the present application, characterized in that, the first overhead is one of the candidate overheads in a first candidate overhead set, where the first candidate overhead set comprises at least a first candidate overhead and a second candidate overhead; the candidate overhead from the first candidate overhead set that corresponds to the first overhead is related to whether the first time window overlaps with the first time domain resource.

As one embodiment, an advantage of the method described above includes: determining the first overhead based on actual requirements, which ensures good compatibility while improving resource utilization.

According to one aspect of the present application, characterized in that, the method comprises:

receiving a second information block;
wherein the second information block is used to determine the first candidate overhead set.

According to one aspect of the present application, characterized in that, the first overhead and the number of symbols assigned to the first signal are jointly used to determine a first integer, and the first integer and the number of RBs assigned to the first signal are jointly used to determine a first value, which is used to determine the first TBS.

According to one aspect of the present application, characterized in that, the method comprises:

receiving (K-1) signals in (K-1) time windows, or sending (K-1) signals in (K-1) time windows;
wherein the first signaling is used to determine K time windows, where K is a positive integer greater than 1; the first time window is one of the K time windows, and the (K-1) time windows are all the time windows among the K time windows except for the first time window; the K signals consist of the (K-1) signals and the first signal, with each of the K signals carrying the first TB; the first overhead is related to whether there is one time window among the K time windows that overlaps with the first time domain resource.

According to one aspect of the present application, characterized in that, the first node is a UE.

According to one aspect of the present application, characterized in that, the first node is a relay node.

Disclosed in the present application is a method used in a second node for wireless communication, characterized in that, the method comprises:

sending a first information block and first signaling, where the first information block is used to determine the first time domain resource, and the first signal comprises scheduling information for a first signal;
sending the first signal in a first time window, or receiving the first signal in a first time window;
wherein, the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

According to one aspect of the present application, characterized in that, the first information block configures the symbols in the first time domain resource to the first type.

According to one aspect of the present application, characterized in that, the first overhead is one of the candidate overheads in a first candidate overhead set, where the first candidate overhead set comprises at least a first candidate overhead and a second candidate overhead; the candidate overhead from the first candidate overhead set that corresponds to the first overhead is related to whether the first time window overlaps with the first time domain resource.

According to one aspect of the present application, characterized in that, the method comprises:

sending a second information block;
wherein the second information block is used to determine the first candidate overhead set.

According to one aspect of the present application, characterized in that, the first overhead and the number of symbols assigned to the first signal are jointly used to determine a first integer, and the first integer and the number of RBs assigned to the first signal are jointly used to determine a first value, which is used to determine the first TBS.

According to one aspect of the present application, characterized in that, the method comprises:

sending (K-1) signals in (K-1) time windows, or receiving (K-1) signals in (K-1) time windows;
wherein the first signaling is used to determine K time windows, where K is a positive integer greater than 1; the first time window is one of the K time windows, and the (K-1) time windows are all the time windows among the K time windows except for the first time window; the K signals consist of the (K-1) signals and the first signal, with each of the K signals carrying the first TB; the first overhead is related to whether there is one time window among the K time windows that overlaps with the first time domain resource.

According to one aspect of the present application, characterized in that, the second node is a base station.
According to one aspect of the present application, characterized in that, the second node is a UE.
According to one aspect of the present application, characterized in that, the second node is a relay node.
Disclosed in the present application is a first node for wireless communication, characterized in that, the node comprises:

a first receiver receiving a first information block and first signaling, where the first information block is used to determine the first time domain resource, and the first signal comprises scheduling information for a first signal;
a first processor receiving the first signal in a first time window, or sending the first signal in a first time window;
wherein, the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

Disclosed in the present application is a second node for wireless communication, characterized in that, the node comprises:

a first transmitter sending a first information block and first signaling, where the first information block is used to determine the first time domain resource, and the first signaling comprises scheduling information for a first signal;
a second processor sending the first signal in a first time window, or receiving the first signal in a first time window;
wherein, the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

As one embodiment, the present application has the following advantages over conventional solutions:

it optimizes the determination of the TBS;
it improves resource utilization while ensuring good compatibility.

## Description of Accompanying Drawings

Other features, objectives, and advantages of the present application will become more apparent by reading the detailed description of the non-limiting embodiments with reference to the following accompanying drawings:

FIG. 1 shows a flow chart of a first information block, a first signaling, and a first signal according to one embodiment of the present application;
FIG. 2 shows a schematic diagram of a network architecture according to one embodiment of the present application;
FIG. 3 shows a schematic diagram of a wireless protocol architecture for a user plane and a control plane, according to one embodiment of the present application;
FIG. 4 shows a schematic diagram of a first communication equipment and a second communication equipment according to one embodiment of the present application;
FIG. 5 shows the transmission between a first node and a second node according to one embodiment of the present application;
FIG. 6 shows the transmission between a first node and a second node according to one embodiment of the present application;
FIG. 7 shows a schematic diagram in which the first information block configures symbols in the first time domain resource as a first type, according to one embodiment of the present application.
FIG. 8 shows a schematic diagram in which the first information block is used to determine a second time domain resource, according to one embodiment of the present application;
FIG. 9 shows a schematic diagram showing, according to one embodiment of the present application, that the candidate overhead from the first candidate overhead set that corresponds to the first overhead is related to whether the first time window overlaps with the first time domain resource;

FIG. 10 shows a schematic diagram showing, according to one embodiment of the present application, that the candidate overhead from the first candidate overhead set that corresponds to the first overhead is related to whether the first time window overlaps with the first time domain resource;

FIG. 11 shows a schematic diagram showing, according to one embodiment of the present application, that the candidate overhead from the first candidate overhead set that corresponds to the first overhead is related to whether the first time window overlaps with the first time domain resource;

FIG. 12 shows a schematic diagram showing, according to one embodiment of the present application, that the candidate overhead from the first candidate overhead set that corresponds to the first overhead is related to whether the first time window overlaps with the first time domain resource;

FIG. 13 shows a schematic diagram of a second information block according to one embodiment of the present application;

FIG. 14 shows a schematic diagram of how the first overhead and the number of symbols assigned to the first signal are jointly used to determine a first integer according to one embodiment of the present application;

FIG. 15 shows a schematic diagram of how the first integer and the number of RBs assigned to the first signal are jointly used to determine a first value according to one embodiment of the present application;

FIG. 16 shows a schematic diagram of how the first value is used to determine a first TBS according to one embodiment of the present application;

FIG. 17 shows a schematic diagram of K time windows and K signals according to one embodiment of the present application;

FIG. 18 shows a schematic diagram of a first signaling used to determine the first time window according to one embodiment of the present application;

FIG. 19 shows a schematic diagram showing, according to one embodiment of the present application, that the first overhead is related to whether there is one time window among the K time windows that overlaps with the first time domain resource;

FIG. 20 shows a structural block diagram of a processing apparatus for use in a first node, according to one embodiment of the present application;

FIG. 21 shows a structural block diagram of a processing apparatus for use in a second node, according to one embodiment of the present application.

## Specific Embodiments

The technical solutions of the present application will be described in further detail below in conjunction with the accompanying drawings, and it is to be noted that the embodiments in the present application and the features in the embodiments may be arbitrarily combined with each other without conflict.

## Embodiment 1

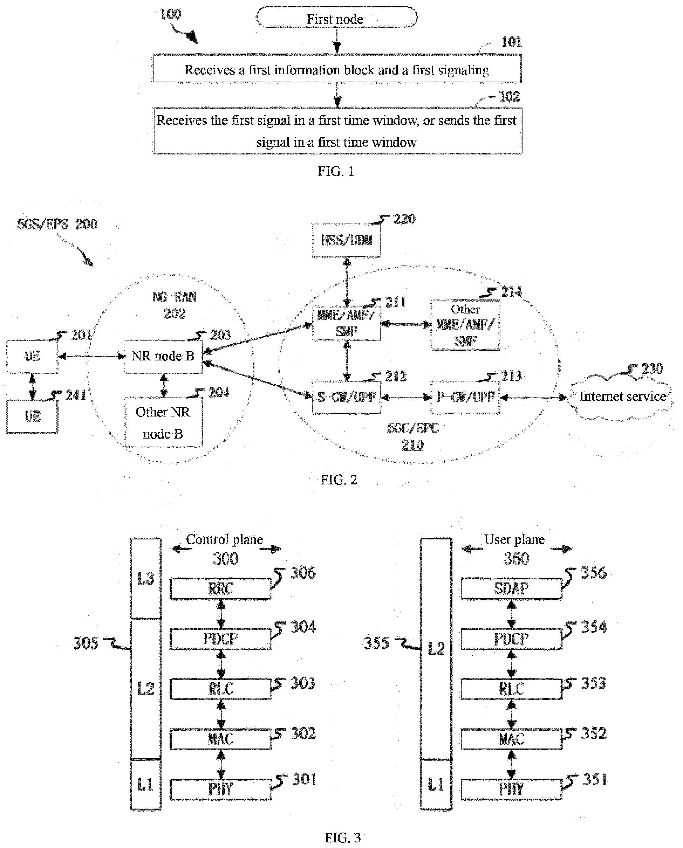

Embodiment 1 exemplifies a flow chart of a first information block, a first signaling, and a first signal according to one embodiment of the present application, as shown in FIG. 1. In the 100 shown in FIG. 1, each box represents a step. Specifically, the sequence of steps in the box does not represent a specific temporal relation between the steps.

In Embodiment 1, the first node in the present application receives the first information block and the first signaling in Step 101; receives a first signal in a first window, or sends the first signal in the first window in Step 102. Wherein the first information block is used to determine the first time domain resource, and the first signaling comprises scheduling information for the first signal; the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

As one embodiment, the TB refers to a transport block.

As one embodiment, the TBS refers to transport block size.

As one embodiment, the first information block is carried by higher layer signaling.

As one embodiment, the first information block is carried by RRC (Radio Resource Control) signaling.

As one embodiment, the first information block comprises information from all or part of the fields in an RRC IE (Information Element).

As one embodiment, the first information block comprises information from all or part of the fields in each RRC IE (Information Element) among a plurality of RRC IEs.

As one embodiment, the first information block comprises information from all or part of the fields in the TDD-UL-DL-ConfigCommon IE.

As one embodiment, the first information block comprises information from all or part of the fields in the TDD-UL-DL-ConfigDedicated IE.

As one embodiment, the first information block comprises information from all or part of the fields in the ServingCellConfig IE.

As one embodiment, the first information block comprises information from all or part of the fields in the ServingCellConfigCommonSIB IE.

As one embodiment, the first information block comprises information from all or part of the fields in the ServingCellConfigCommon IE.

As one embodiment, the first information block is carried by at least one RRC IE.

As one embodiment, the name of an IE carrying the first information block comprises *"TDD-UL-DL-Config"*.

As one embodiment, the name of an IE carrying the first information block comprises *"ServingCellConfig"*.

As one embodiment, the first information block is carried by the *TDD-UL-DL-ConfigCommon* IE.

As one embodiment, the first information block is carried by the *TDD-UL-DL-ConfigDedicated* IE.

As one embodiment, the first information block is carried by *the ServingCellConfig* IE.

As one embodiment, the first information block is carried by *the ServingCellConfigCommon* IE.

As one embodiment, the first information block is carried by *the ServingCellConfigCommonSIB* IE.

As one embodiment, the first information block is carried by a MAC CE (Medium Access Control Layer Control Element).

As one embodiment, the first information block comprises the MAC CE.

As one embodiment, the first information block is carried by DCI (downlink control information). As one embodiment, the first information block comprises DCI.

As one embodiment, the first information block comprises information from one or more fields in a DCI.

As one embodiment, the first information block is carried by DCI format 2_0.

As one embodiment, the first information block comprises DCI format 2_0.

As one embodiment, the first information block is jointly carried by RRC signaling and MAC CE.

As one embodiment, the first information block is jointly carried by higher layer signaling and DCI.

As one embodiment, the first time domain resource comprises a symbol.

As one embodiment, the first time domain resource comprises a plurality of consecutive symbols.

As one embodiment, the first time domain resource comprises a plurality of non-consecutive symbols.

As one embodiment, the first time domain resource comprises at least one slot.

As one embodiment, the first time domain resource comprises at least one subframe.

As one embodiment, the sender of the first signaling simultaneously performs reception and transmission in the first time domain resource.

As one embodiment, the sender of the first signaling simultaneously receives and sends radio signals in the first time domain resource.

As one embodiment, the sender of the first signaling is capable of simultaneously receiving and sending radio signals in the first time domain resource.

As one embodiment, the sender of the first signaling simultaneously receives and sends radio signals in at least one symbol of the first time domain resource.

As one embodiment, the sender of the first signaling simultaneously receives and sends radio signals in any symbol of the first time domain resource.

As one embodiment, the sender of the first signaling simultaneously receives and sends radio signals in the first time domain resource within the cell where the first signal is located.

As one embodiment, the sender of the first signaling simultaneously receives and sends radio signals in any symbol of the first time domain resource within the cell where the first signal is located.

As one embodiment, the sender of the first signaling simultaneously receives and sends radio signals in at least one symbol of the first time domain resource within the cell where the first signal is located.

As one embodiment, the sender of the first signaling simultaneously receives and sends radio signals in the first time domain resource within the cell group where the first signal is located.

As one embodiment, the sender of the first signaling simultaneously receives and sends radio signals in the first time domain resource within the cell where the first signaling is located.

As one embodiment, the sender of the first signaling simultaneously receives and sends radio signals in the first time domain resource within the BWP (BandWidth Part) to which the first signaling belongs.

As one embodiment, the sender of the first signaling simultaneously receives and sends radio signals in the first time domain resource within the BWP to which the first signal belongs.

As one embodiment, the first time domain resource comprises symbols that are simultaneously used for uplink and downlink transmission.

As one embodiment, any symbol in the first time domain resource is capable of being simultaneously used for uplink and downlink transmission.

As one embodiment, any symbol in the first time domain resource is simultaneously used for uplink and downlink transmission.

As one embodiment, at least one symbol in the first time domain resource is simultaneously used for uplink and downlink transmission.

As one embodiment, any symbol in the first time domain resource is simultaneously used for uplink and downlink transmission within the cell where the first signal is located.

As one embodiment, at least one symbol in the first time domain resource is simultaneously used for uplink and downlink transmission within the cell where the first signal is located.

As one embodiment, at least one symbol in the first time domain resource is simultaneously used for uplink and downlink transmission within the cell group where the first signal is located.

As one embodiment, at least one symbol in the first time domain resource is simultaneously used for uplink and downlink transmission within the BWP to which the first signal belongs.

As one embodiment, at least one symbol in the first time domain resource is simultaneously used for uplink and downlink transmission within the BWP to which the first signaling belongs.

As one embodiment, the first information block indicates that the sender of the first signaling simultaneously receives and sends radio signals in the first time domain resource.

As one embodiment, the first information block indicates that the symbols in the first time domain resource are simultaneously used for uplink and downlink transmission.

As one embodiment, the first time domain resource does not include symbols used for transmitting the first type of downlink signal, where the first type of downlink signal comprises one or a plurality of the SS (Synchronization Signal), PBCH (Physical Broadcast Channel) Block, the CORESET (COntrol REsource SET) indexed at 0, or the SIB (System Information Block).

As one embodiment, the first signaling comprises physical layer signaling.

As one embodiment, the first signaling comprises dynamic signaling.

As one embodiment, the first signaling comprises signaling of Layer 1 (L1).

As one embodiment, the first information block comprises DCI.

As one embodiment, the first signaling is a DCI.

As one embodiment, the first signaling comprises one or a plurality of DCI fields in a DCI.

As one embodiment, the CRC (cyclic redundancy check) of the first signaling is scrambled by the C (Cell)-RNTI (Radio Network Temporary Identifier).

As one embodiment, the CRC of the first signaling is scrambled by the MCS (Modulation and Coding Scheme)-C-RNTI (Cell Radio Network Temporary Identifier).

As one embodiment, the first signaling is used to schedule at least one PDSCH (Physical Downlink Shared CHannel), where the first node receives the first signal in the first time window.

As one embodiment, the first signaling is used to schedule at least one PUSCH (Physical Uplink Shared CHannel), where the first node sends the first signal in the first time window.

As one embodiment, the first signaling comprises RRC signaling.

As one embodiment, the first signaling comprises the MAC CE.

As one embodiment, the first time window comprises one symbol or a plurality of consecutive symbols.

As one embodiment, the first time window is located within a slot.

As one embodiment, the first signaling is used to determine the first time window.

As one embodiment, the first signaling indicates the first time window.

As one embodiment, the first signaling indicates the slot to which the first time window belongs.

As one embodiment, the first signaling indicates the first symbol of the first time window within the slot to which it belongs.

As one embodiment, the first signaling indicates the number of symbols occupied by the first time window.

As one embodiment, the first signaling is a DCI, and the DCI field "Time domain resource assignment" in the first signaling is used to determine the first time window.

As one embodiment, the first signaling is a DCI, and the DCI field "Time domain resource assignment" in the first signaling indicates the first time window.

As one embodiment, the time domain resource assigned to the first signal is the first time window.

As one embodiment, the symbols comprise OFDM (Orthogonal Frequency Division Multiplexing) symbols.

As one embodiment, the symbols are OFDM symbols.

As one embodiment, the symbols comprise DFT-S-OFDM (Discrete Fourier Transform Spread OFDM) symbols.

As one embodiment, the symbols are obtained after the output of transform precoding is processed through OFDM symbol generation.

As one embodiment, the first signal comprises a baseband signal.

As one embodiment, the first signal comprises a wireless signal.

As one embodiment, the first signal comprises a radio frequency signal.

As one embodiment, the first signal is a repetition of the first TB.

As one embodiment, the scheduling information comprises one or a plurality of the time domain resource, frequency domain resource, MCS, DMRS (DeModulation Reference Signals) port, HARQ (Hybrid Automatic Repeat Request) process number, RV (Redundancy Version), NDI (New Data Indicator), TCI (Transmission Configuration Indicator) state, or SRI (Sounding Reference Signal Resource Indicator).

As one embodiment, the first TBS is the number of bits included **in** the first TB.

As one embodiment, the first overhead is xOverhead.

As one embodiment, the first overhead is $N_{oh}^{PRB}$ .

As one embodiment, $N_{oh}^{PRB}$ is as defined in 5.1.3.1 and 6.1.4.2 of 3GPP TS38.214 (V16.8.0).

As one embodiment, the first overhead is a non-negative integer.

As one embodiment, the first overhead is a non-negative real number.

As one embodiment, the first overhead is equal to one of 0, 6, 12, or 18.

As one embodiment, the meaning of the sentence "the first overhead is used to determine the first TBS" comprises: the first TBS being dependent on the first overhead.

As one embodiment, the meaning of the sentence "the first overhead is used to determine the first TBS" comprises: the first overhead being used to calculate the first TBS.

As one embodiment, the value of the first TBS varies with the first overhead.

As one embodiment, the value of the first TBS decreases with the increase of the first overhead.

As one embodiment, when the first overhead equals A1, the first TBS equals B1; when the first overhead equals A2, the first TBS equals B2; where A1 is greater than A2, and B1 is not greater than B2.

As one embodiment, the first overhead depends on whether the first time window overlaps with the first time domain resource.

As one embodiment, whether the first time window overlaps with the first time domain resource is used to determine the first overhead.

As one embodiment, the first node determines the first overhead based on whether the first time window overlaps with the first time domain resource.

As one embodiment, the meaning of the sentence "the first overhead is related to whether the first time window overlaps with the first time domain resource" comprises: the first overhead being related to whether the first time window belongs to the first time domain resource.

As one embodiment, the first overhead depends on whether the first time window belongs to the first time domain resource.

As one embodiment, whether the first time window belongs to the first time domain resource is used to determine the first overhead.

As one embodiment, the meaning of the sentence "the first overhead is related to whether the first time window overlaps with the first time domain resource" comprises: the first overhead being related to whether at least one symbol in the first time window belongs to the first time domain resource.

As one embodiment, the first overhead depends on whether at least one symbol in the first time window belongs to the first time domain resource.

As one embodiment, whether at least one symbol in the first time window belongs to the first time domain resource is used to determine the first overhead.

As one embodiment, the meaning of the sentence "the first overhead is related to whether the first time window overlaps with the first time domain resource" comprises: the first overhead being related to whether each symbol in the first time window belongs to the first time domain resource.

As one embodiment, the first overhead depends on whether each symbol in the first time window belongs to the first time domain resource.

As one embodiment, whether each symbol in the first time window belongs to the first time domain resource is used to determine the first overhead.

As one embodiment, the value of the first overhead when the first time window overlaps with the first time domain resource is not equal to the value of the first overhead when the first time window is orthogonal to the first time domain resource.

As one embodiment, the value of the first overhead when each symbol in the first time window belongs to the first time domain resource is not equal to the value of the first overhead when at least one symbol in the first time window does not belong to the first time domain resource.

As one embodiment, the value of the first overhead when each symbol in the first time window belongs to the overlap of the first time domain resource is not equal to the value of the first overhead when each symbol in the first time window does not belong to the first time domain resource.

As one embodiment, the first node receives the first signal in the first time window.

As one embodiment, the first node sends the first signal over the first time window.

<u>Embodiment 2</u>

Embodiment 2 exemplifies a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of LTE, LTE-A, and future 5G systems is referred to as the EPS (Evolved Packet System) 200. The 5G NR or LTE network architecture 200 may be referred to as the 5GS (5G System)/EPS (Evolved Packet System) 200 or some other suitable term. The 5GS/EPS 200 may comprise one or a plurality of UE 201, one UE 241 for sidelink communication with UE (User Equipment) 201, an NG-RAN (next generation wireless access network) 202, a 5GC (5G CoreNetwork)/EPC (Evolved Packet Core) 210, an HSS (Home Subscriber Server)/UDM (Unified Data Management) 220, and an Internet service 230. The 5GS/EPS 200 may be interconnected with other access networks, but these entities/interfaces are not shown for simplicity. As shown in FIG. 2, the 5GS/EPS 200 provides packet exchange services. However, it is readily understood by those ordinary skill in the art that various concepts presented throughout the present application may be extended to networks that provide circuit switching services. The NG-RAN 202 comprises an NR (New Radio) node B (gNB) 203 and other gNBs 204. The gNB 203 provides user and control plane protocol termination towards the UE 201. The gNB 203 may be connected to another gNB 204 via an Xn interface (e.g., backhaul). The gNB 203 may also be referred to as a base station, a base transceiver station, a radio base station, a radio transceiver, a transceiver function, a basic service set (BSS), an extended service set (ESS), a TRP (transmitter receiver point), or some other suitable term. The gNB 203 provides access points to the 5GC/EPC 210 for the UE 201. Examples of the UE 201 comprise cellular phones, smart phones, session initiation protocol (SIP) phones, laptop computers, personal digital assistants (PDA), satellite radios, global positioning systems, multimedia devices, video devices, digital audio players (e.g., MP3 players), cameras, game consoles, unmanned aerial vehicles, aircraft, narrowband Internet of Things devices, machine-type communications devices, land vehicles, automobiles, wearable devices, or any other similar functional devices. Those ordinary skill in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handheld device, a user agent, a mobile client, a client, or some other suitable term. The gNB 203 is connected to the 5GC/EPC 210 via an S1/NG interface. The 5GC/EPC 210 comprises an MME (Mobility Management Entity)/AMF (Authentication Management Field)/SMF (Session Management Function) 211, other MME/AMF/SMF 214, an S-GW (Service Gateway)/UPF (user plane function) 212, and a P-GW (Packet Date [sic: Data] Network Gateway)/UPF 213. The MME/AMF/SMF 211 is a control node that processes signaling between the UE 201 and the 5GC/EPC 210. In general, the MME/AMF/SMF 211 provides bearer and connection management. All user IPs (Internet Protocal [sic: Protocol]) packets are sent via the S-GW/UPF 212, and the S-GW/UPF 212 is itself connected to the P-GW/UPF 213. The P-GW provides UE IP address assignment as well as other functions. The P-GW/UPF 213 is connected to the Internet service 230. The Internet service 230 comprises the operator's corresponding Internet Protocol services, which may specifically comprise the Internet, an intranet, an IMS (IP Multimedia Subsystem), and packet switching services.

As one embodiment, the first node in the present application comprises the UE 201.

As one embodiment, the second node in the present application comprises the gNB 203.

As one embodiment, the wireless link between the UE 201 and the gNB 203 comprises a cellular network link.

As one embodiment, the sender of the first information block comprises the gNB 203.

As one embodiment, the receiver of the first information block comprises the UE 201.

As one embodiment, the sender of the first signaling comprises the gNB 203.

As one embodiment, the receiver of the first signaling comprises the UE 201.

As one embodiment, the sender of the first signal comprises the gNB 203.

As one embodiment, the receiver of the first signal comprises the UE 201.

As one embodiment, the sender of the first signal comprises the UE 201.

As one embodiment, the receiver of the first signal comprises the gNB 203.

As one embodiment, the gNB 203 supports SBFD.

As one embodiment, the gNB 203 supports a more flexible duplex mode or full-duplex mode.

As one embodiment, the UE 201 supports SBFD.

As one embodiment, the UE 201 supports a more flexible duplex mode or full-duplex mode.

## Embodiment 3

Embodiment 3 exemplifies a schematic diagram of a wireless protocol architecture for a user plane and a control plane, according to one embodiment of the present application, as shown in FIG. 3.

Embodiment 3 shows a schematic diagram of one wireless protocol architecture for a user plane and a control plane, according to the present application, as shown in FIG. 3. FIG. 3 is a schematic diagram illustrating an embodiment of a radio protocol architecture for a user plane 350 and a control plane 300. FIG. 3 shows, with three layers, a radio protocol architecture of a control plane 300 between a first communication node equipment (RSU in UE, gNB or V2X) and a second communication node equipment (RSU in gNB, UE or V2X), or between the two UEs: Layer 1, Layer 2 and Layer 3. Layer 1 (L1) is the lowest layer and implements various PHY (physical layer) signal processing functions. L1 will be referred to herein as PHY 301. Layer 2 (L2) 305 is above PHY 301 and is responsible for the link between the first communication node equipment and the second communication node equipment, or between the two UEs. L2 305 comprises a MAC (Medium Access Control) sublayer 302, an RLC (Radio Link Control) sublayer 303, and a PDCP (Packet Data Convergence Protocol) sublayer 304, and these sublayers terminate at the second communication node equipment. The PDCP sublayer 304 provides multiplexing between different radio bearers and logical channels. The PDCP sublayer 304 also provides security by encrypting data packets and provides inter-zone movement support between the second communication node equipment and the first communication node equipment. The RLC sublayer 303 provides segmentation and reassembly of upper layer data packets, re-transmission of lost data packets, and re-ordering of data packets to compensate for out-of-sequence reception due to HARQ. The MAC sublayer 302 provides multiplexing between logical and transmission channels. The MAC sublayer 302 is also responsible for distributing various radio resources (e.g., resource blocks) in one cell between first communication node equipment. The MAC sublayer 302 is also responsible for HARQ operations. The RRC (Radio Resource Control) sublayer 306 in Layer 3 (L3) in the control plane 300 is responsible for obtaining radio resources (i.e., radio bearers) and configuring the lower layers using RRC signaling between the second communication node equipment and the first communication node equipment. The radio protocol architecture of the user plane 350 comprises Layer 1 (L1) and Layer 2 (L2), the radio protocol architecture of the user plane 350 for the first communication node equipment and the second communication node equipment is generally identical to the corresponding layer and sublayer in the control plane 300 in terms of a physical layer 351, a PDCP sublayer 354 in L2 355, an RLC sublayer 353 in L2 355, and a MAC sublayer 352 in L2 355, but the PDCP sublayer 354 also provides header compression for upper layer data packets to reduce radio transmission overhead. L2 355 in the user plane 350 also comprises an SDAP (Service Data Adaption Protocol) sublayer 356, and the SDAP sublayer 356 is responsible for mapping between a QoS stream and a data radio bearer (DRB) to support the diversity of the service. Although not shown in the figure, the first communication node equipment may have several upper layers above L2 355, including a network layer (e.g., an IP layer) that terminates at the P-GW on the network side and an application layer that terminates at the other end of the connection (e.g., a remote UE, a server, and the like).

As one embodiment, the wireless protocol architecture in FIG. 3 applies to the first node in the present application.

As one embodiment, the wireless protocol architecture in FIG. 3 applies to the second node in the present application.

As one embodiment, the first information block is generated at the RRC sublayer 306.

As one embodiment, the first information block is generated at the MAC sublayer 302 or the MAC sublayer 352.

As one embodiment, the first signaling is generated at PHY 301 or PHY 351.

As one embodiment, the first signaling is generated at the MAC sublayer 302 or the MAC sublayer 352.

As one embodiment, the first signal is generated at PHY 301 or PHY 351.

As one embodiment, the higher layers in the present application refer to the layers above the physical layer.

## Embodiment 4

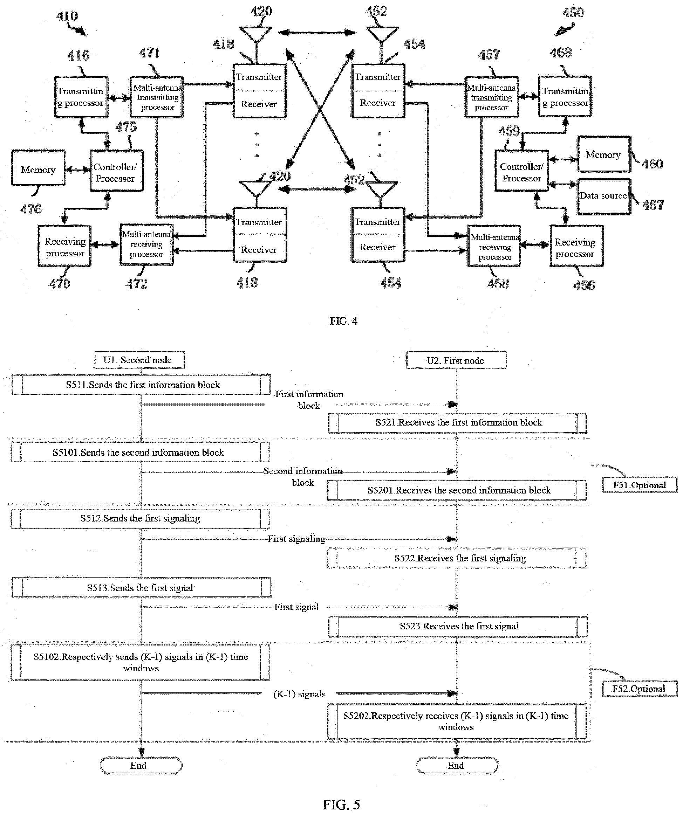

Embodiment 4 exemplifies a schematic diagram of a first communication equipment and a second communication equipment according to one embodiment of the present application, as shown in FIG. 4. FIG. 4 is a block diagram of a first communication equipment 410 and a second communication equipment 450 in communication with each other over an access network.

The first communication equipment 410 comprises a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication equipment 450 comprises a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In the transmission from the first communication equipment 410 to the second communication equipment 450, at the first communication equipment 410, an upper layer data packet from the core network is provided to the controller/processor 475. The controller/processor 475 implements the functionality of L2. In the DL, the controller/processor 475 provides header compression, encryption, packet segmentation and re-ordering, multiplexing between logical and transmission channels, and radio resource assignment to the second communication equipment 450 based on various priority measures. The controller/processor 475 is also responsible for HARQ operations, re-transmission of lost packets and signaling to the second communication equipment 450. The transmitting processor 416 and the multi-antenna transmitting processor 471 implement various signal processing functions for L1 (i.e., the physical layer). The transmitting processor 416 implements coding and interleaving to facilitate forward error correction (FEC) at the second communication equipment 450, and constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 pre-codes coded and modulated symbols in digital space, including codebook-based pre-coding and non-codebook-based pre-coding, and beamforming processing, generating one or a plurality of parallel streams. The transmitting processor 416 then maps each parallel stream to a subcarrier, multiplexes the modulated symbols with a reference signal (e.g., pilot) in the time domain and/or frequency domain, and then uses an inverse fast Fourier transform (IFFT) to generate a physical channel of the time domain multi-carrier symbol stream on the carrier. The multi-antenna transmitting processor 471 then sends the analog pre-coding/beamforming operation for the time domain multi-carrier symbol stream. Each transmitter 418 converts the baseband multi-carrier symbol stream provided by the multi-antenna transmitting processor 471 into a radio frequency stream, which is then provided to a different antenna 420.

In the transmission from the first communication equipment 410 to the second communication equipment 450, at the second communication equipment 450, each receiver 454 receives a signal through the respective antenna 452 thereof. Each receiver 454 recovers information that is modulated onto the radio frequency carrier, converts the radio frequency stream into a baseband multi-carrier symbol stream and provides it to the receiving processor 456. The receiving processor 456 and the multi-antenna receiving processor 458 implement various signal processing functions of L1. The multi-antenna receiving processor 458 receives the analog pre-coding/beamforming operation for the baseband multi-carrier symbol stream from the receiver 454. The receiving processor 456 uses fast Fourier transform (FFT) to convert the baseband multi-carrier symbol stream from the time domain to the frequency domain after receiving the analog pre-coding/beamforming operation. In the frequency domain, the physical layer data signal and the reference signal are demultiplexed by the receiving processor 456, wherein the reference signal is used for channel estimation and the data signal restores any parallel stream destined for the second communication equipment 450 after multi-antenna detection by the multi-antenna receiving processor 458. The symbols on each parallel stream are demodulated and restored in the receiving processor 456 and generate a soft decision. The receiving processor 456 then decodes and de-interleaves the soft decision to restore upper layer data and control signals transmitted by the first communication equipment 410 over the physical channel. The upper layer data and control signals are then provided to the controller/processor 459. The controller/processor 459 implements the functions of L2. The controller/processor 459 may be associated with the memory 460 storing program code and data. The memory 460 may be referred to as a computer-readable medium. In the DL, the controller/processor 459 provides demultiplexing between transport and logical channels, packet reassembly, decryption, header decompression, and control signal processing to restore the upper layer data packet from the core network. The upper layer data packet is then provided to all protocol layers above L2. Various control signals may also be provided to L3 for L3 processing. The controller/processor 459 is also responsible for error detection using acknowledgment (ACK) and/or negative acknowledgment (NACK) protocols to support HARQ operations.

In the transmission from the second communication equipment 450 to the first communication equipment 410, at the second communication equipment 450, the data source 467 is used to provide the upper layer data packet to the controller/processor 459. The data source 467 represents all protocol layers above L2. Similar to the sending function at the first communication equipment 410 described in the DL, the controller/processor 459 implements header compression, encryption, packet segmentation and re-ordering based on the wireless resource assignment of the first communication equipment 410, as well as multiplexing between logical and transmission channels, to implement L2 functions for the user plane and control plane. The controller/processor 459 is also responsible for HARQ operations, the re-transmission of lost packets, and signaling to the first communication equipment 410. The transmitting processor 468 performs modulation mapping and channel coding processing, the multi-antenna transmitting processor 457 carries out digital multi-antenna spatial pre-coding, including codebook-based precoding and non-codebook-based pre-coding, and beamforming processing, and then the transmitting processor 468 modulates the generated parallel stream to a multi-carrier/single-carrier symbol stream, which is then sent to a different antenna 452 via the transmitter 454 after the analog pre-coding/beamforming operation by the multi-antenna transmitting processor 457. Each transmitter 454 first converts the baseband symbol stream provided by the multi-antenna transmitting processor 457 into a radio frequency symbol stream and then provides it to the antenna 452.

In the transmission from the second communication equipment 450 to the first communication equipment 410, the functions at the first communication equipment 410 are similar to the receiving function at the second communication equipment 450 described **in** the transmission from the first communication equipment 410 to the second communication equipment 450. Each receiver 418 receives a radio frequency signal through the respective antenna 420, thereof, converts the received radio frequency signal into a baseband signal, and provides the baseband signal to the multi-antenna receiving processor 472 and the receiving processor 470. The receiving processor 470 and the multi-antenna receiving processor 472 collectively implement the functions of L1. The controller/processor 475 implements the functions of L2. The controller/processor 475 may be associated with the memory 476 storing program code and data. The memory 476 may be referred to as a computer-readable medium. The controller/processor 475 provides demultiplexing between transport and logical channels, packet reassembly, decryption, header decompression, and control signal processing to restore the upper layer data packet from the second communication equipment 450. The upper layer data packet from the controller/processor 475 may be provided to the core network. The controller/processor 475 is also responsible for error detection using the ACK and/or NACK protocols to support HARQ operations.

As one embodiment, the second communication equipment 450 comprises: at least one processor and at least one memory, wherein the at least one memory comprises a computer program code; the at least one memory and the computer program code are configured to be used with the at least one processor. The second communication equipment 450 is configured to receive at least the first information block and the first signaling; to receive the first signal within the first time window, or to send the first signal within the first time window. Wherein the first information block is used to determine the first time domain resource, and the first signaling comprises scheduling information for the first signal; the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

As one embodiment, the second communication equipment 450 comprises: a memory storing a computer-readable instruction program that when executed by at least one processor generates an action, and the action comprises: receiving at least the first information block and the first signaling; receiving the first signal within the first time window, or sending the first signal within the first time window.

As one embodiment, the first communication equipment 410 comprises: at least one processor and at least one memory, wherein the at least one memory comprises a computer program code; the at least one memory and the computer program code are configured to be used with the at least one processor. The first communication equipment 410 is configured to receive at least the first information block and the first signaling; to receive the first signal within the first time window, or to send the first signal within the first time window. Wherein the first information block is used to determine the first time domain resource, and the first signaling comprises scheduling information for the first signal; the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

As one embodiment, the first communication equipment 410 comprises: a memory storing a computer-readable instruction program that when executed by at least one processor generates an action, and the action comprises: sending at least the first information block and the first signaling; sending the first signal within the first time window, or receiving the first signal within the first time window.

As one embodiment, the first node in the present application comprises the second communication equipment 450.

As one embodiment, the second node in the present application comprises the first communication equipment 410.

As one embodiment, at least one of {the antenna 452, the receiver 454, the receiving processor 456, the multi-antenna receiving processor 458, the controller/processor 459, the memory 460, the data source 467} is used to receive the first information block; at least one of {the antenna 420, the transmitter 418, the transmitting processor 416, the multi-antenna transmitting processor 471, the controller/processor 475, the memory 476} is used to send the first information block.

As one embodiment, at least one of {the antenna 452, the receiver 454, the receiving processor 456, the multi-antenna receiving processor 458, the controller/processor 459, the memory 460, the data source 467} is used to receive the first signaling; at least one of {the antenna 420, the transmitter 418, the transmitting processor 416, the multi-antenna transmitting processor 471, the controller/processor 475, the memory 476} is used to send the first signaling.

As one embodiment, at least one of {the antenna 452, the receiver 454, the receiving processor 456, the multi-antenna receiving processor 458, the controller/processor 459, the memory 460, the data source 467} is used to receive the first signal in the first time window; at least one of {the antenna 420, the transmitter 418, the transmitting processor 416, the multi-antenna transmitting processor 471, the controller/processor 475, the memory 476} is used to send the first signal in the first time window.

As one embodiment, at least one of {the antenna 420, the receiver 418, the receiving processor 470, the multi-antenna receiving processor 472, the controller/processor 475, the memory 476} is used to receive the first signal in the first time window; at least one of {the antenna 452, the transmitter 454, the transmitting processor 468, the multi-antenna transmitting processor 457, the controller/processor 459, the memory 460, the data source 467} is used to send the first signal in the first time window.

As one embodiment, at least one of {the antenna 452, the receiver 454, the receiving processor 456, the multi-antenna receiving processor 458, the controller/processor 459, the memory 460, the data source 467} is used to receive the second information block; at least one of {the antenna 420, the transmitter 418, the transmitting processor 416, the multi-antenna transmitting processor 471, the controller/processor 475, the memory 476} is used to send the second information block.

As one embodiment, at least one of {the antenna 452, the receiver 454, the receiving processor 456, the multi-antenna receiving processor 458, the controller/processor 459, the memory 460, the data source 467} is used to respectively receive the (K-1) signals in the (K-1) time windows; at least one of {the antenna 420, the transmitter 418, the transmitting processor 416, the multi-antenna transmitting processor 471, the controller/processor 475, the memory 476} is used to respectively send the (K-1) signals in the (K-1) time windows.

As one embodiment, at least one of {the antenna 420, the receiver 418, the receiving processor 470, the multi-antenna receiving processor 472, the controller/processor 475, the memory 476} is used to respectively receive the (K-1) signals in the (K-1) time windows; at least one of {the antenna 452, the transmitter 454, the transmitting processor 468, the multi-antenna transmitting processor 457, the controller/processor 459, the memory 460, the data source 467} is used to respectively send the (K-1) signals in the (K-1) time windows.

## Embodiment 5

Embodiment 5 exemplifies a radio transmission flow chart according to one embodiment of the present application, as shown in FIG. 5. In FIG. 5, the second node U1 and the first node U2 are communication nodes transmitted via the air interface. In FIG. 5, the steps in box F51 and box F52 are respectively optional.

For the second node U1, a first information block is sent in Step S511; a second information block is sent in Step S5101; a first signaling is sent in Step S512; a first signal is sent in Step S513; and (K-1) signals are respectively sent in (K-1) time windows in Step S5102.

For the first node U2, the first information block is received in Step S521, the second information block is received in Step S5201, the first signaling is received in Step S522, the first signal is received in Step S523, and (K-1) signals are respectively received in (K-1) time windows in Step S5202.

In Embodiment 5, the first information block is used by the first node U2 to determine the first time domain resource, and the first signaling comprises scheduling information for the first signal; the first time domain resource comprises at least one symbol, and the first time window comprises at least one symbol; the first signal carries a first TB; the size of the first TB is the first TBS, with the first overhead being used by the first node U2 to determine the first TBS, and the first overhead being related to whether the first time window overlaps with the first time domain resource.

As one embodiment, the first node U2 is the first node in the present application.

As one embodiment, the second node U1 is the second node in the present application.

As one embodiment, the air interface between the second node U1 and the first node U2 comprises a wireless interface between a base station equipment and a user equipment.

As one embodiment, the air interface between the second node U1 and the first node U2 comprises a wireless interface between a relay node and user equipment.

As one embodiment, the air interface between the second node U1 and the first node U2 comprises a wireless interface between user equipment and another user equipment.

As one embodiment, the second node U1 is the serving cell maintenance base station of the first node U2.

As one embodiment, the first information block is transmitted on a downlink physical layer data channel (i.e., a downlink channel capable of carrying physical layer data).

As one embodiment, the first information block is transmitted on the PDSCH.

As one embodiment, the first signaling is transmitted on a downlink physical layer control channel (i.e., a downlink channel that is only capable of carrying physical layer signaling).

As one embodiment, the first signaling is transmitted on the PDCCH (Physical Downlink Control CHannel).

As one embodiment, the first node receives the first signal in the first time window, and the first signal is transmitted on the PDSCH.

As one embodiment, the step in box F51 of FIG. 5 is present; the second information block is used by the first node U2 to determine the first candidate overhead set; the first overhead is one of the candidate overheads in the first candidate overhead set, where the first candidate overhead set comprises at least a first candidate overhead and a second candidate overhead.

As one embodiment, the second information block is transmitted on the PDSCH.

As one embodiment, the second information block is earlier in the time domain than the first information block.

As one embodiment, the second information block is later in the time domain than the first information block.

As one embodiment, the step in box F52 of FIG. 5 is present; the first signaling is used by the first node U2 to determine K time windows, where K is a positive integer greater than 1; the first time window is one of the K time windows, and the (K-1) time windows are all the time windows of the K time windows except for the first time window; the K signals consist of the (K-1) signals and the first signal, with each of the K signals carrying the first TB; the first overhead is related to whether one of the K time windows overlaps with the first time domain resource.

As one embodiment, the first signal is transmitted on the PDSCH and the (K-1) signals are respectively transmitted on the PDSCH.

As one embodiment, the first node receives the first signal in the first time window and respectively receives the (K-1) signals in the (K-1) time windows.

As one embodiment, the K signals are respectively transmitted on K different PDSCHs.

As one embodiment, the K signals are transmitted on the same PDSCH.

As one embodiment, at least two of the K signals are transmitted on the same PDSCH.

As one embodiment, at least two of the K signals are transmitted on different PDSCHs.

## Embodiment 6

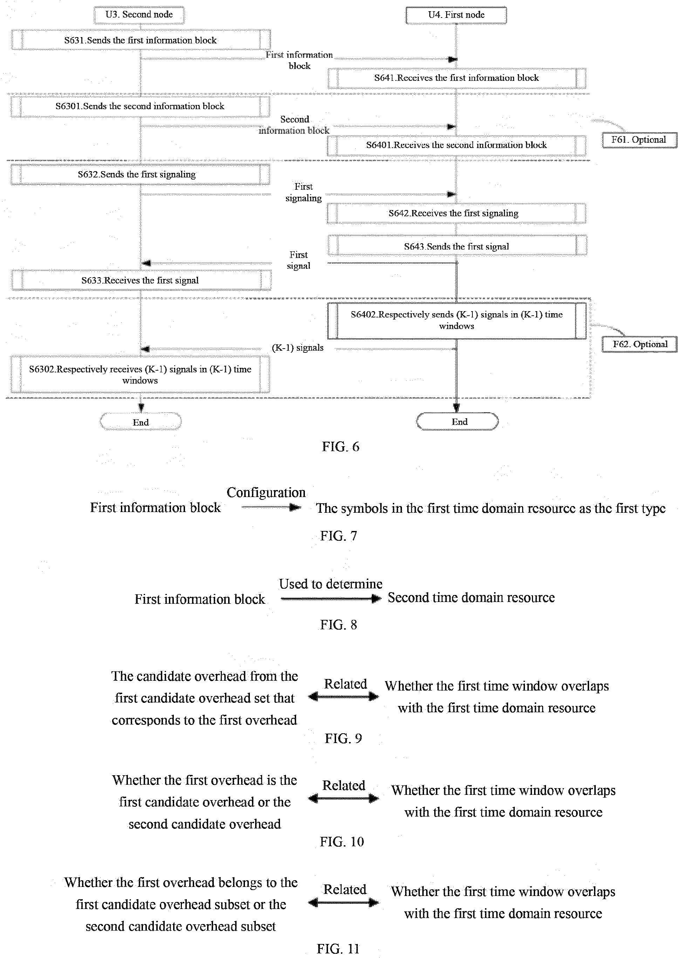

Embodiment 6 exemplifies a radio transmission flow chart according to one embodiment of the present application, as shown in FIG. 6. In FIG. 6, the second node U3 and the first node U4 are communication nodes transmitted via the air interface. In FIG. 6, the steps in box F61 and box F62 are respectively optional.

For the second node U3, a first information block is sent in Step S631; a second information block is sent in Step S6301; a first signaling is sent in Step S632; a first signal is sent in Step S633; and (K-1) signals are respectively sent in (K-1) time windows in Step S6302.

For the first node U4, a first information block is received in Step S641; a second information block is received in Step S6401; a first signal is received in Step S642; a first signal is sent in Step S643; and (K-1) signals are respectively sent in (K-1) windows in Step S6402.

In Embodiment 6, the first information block is used by the first node U4 to determine the first time domain resource, and the first signaling comprises scheduling information for the first signal; the first time domain resource comprises at least one symbol, and the first time window comprises at least one symbol; the first signal carries a first TB; the size of the first TB is the first TBS, with the first overhead being used by the first node U2 to determine the first TBS, and the first overhead being related to whether the first time window overlaps with the first time domain resource.

As one embodiment, the first node U4 is the first node **in** the present application.

As one embodiment, the second node U3 is the second node **in** the present application.

As one embodiment, the second node U3 is the serving cell maintenance base station of the first node U4.

As one embodiment, the first node sends the first signal **in** the first time window, and the first signal is transmitted on the PUSCH.

As one embodiment, the step **in** box F62 of FIG. 6 is present; the first node receives the first signal **in** the first time window and respectively receives the (K-1) signals **in** the (K-1) time windows.

As one embodiment, the first signal is transmitted on the PUSCH and the (K-1) signals are respectively transmitted on the PUSCH.

As one embodiment, the K signals are respectively transmitted on K different PUSCHs.

As one embodiment, the K signals are transmitted on the same PUSCH.

As one embodiment, at least two of the K signals are transmitted on the same PUSCH.

As one embodiment, at least two of the K signals are transmitted on different PUSCHs.

## Embodiment 7

Embodiment 7 exemplifies a schematic diagram in which a first information block configures symbols in the first time domain resource as a first type, according to one embodiment of the present application, as shown in FIG. 7.

As one embodiment, the first information block configures symbols in the first time domain resource in the cell in which the first signal is located as the first type.

As one embodiment, the first information block configures symbols in the first time domain resource in the cell group in which the first signal is located as the first type.

As one embodiment, the first information block configures symbols in the first time domain resource in the BWP in which the first signal is located as the first type.

As one embodiment, the first information block configures symbols in the first time domain resource in the BWP in which the first signaling is located as the first type.

As one embodiment, the meaning of the phrase "configures symbols in the first time domain resource as the first type" comprises the following: configuring each symbol in the first time domain resource as the first type.

As one embodiment, the meaning of the phrase "configures symbols in the first time domain resource as the first type" comprises the following: configuring at least one symbol in the first time domain resource as the first type.

As one embodiment, the meaning of the phrase "configures symbols in the first time domain resource as the first type" comprises the following: configuring the type of the symbols in the first time domain resource as the first type.

As one embodiment, the meaning of the phrase "configures symbols in the first time domain resource as the first type" comprises the following: configuring the type of each symbol in the first time domain resource as the first type.

As one embodiment, the meaning of the phrase "configures symbols in the first time domain resource as the first type" comprises the following: configuring the type of at least one symbol in the first time domain resource as the first type.

As one embodiment, the meaning of the phrase "the first information block is used to determine the first time domain resource" comprises the following: the first information block configuring the symbols in the first time domain resource as the first type.

As one embodiment, the meaning of the phrase "the first information block is used to determine the first time domain resource" comprises the following: the first information block configuring each of the symbols in the first time domain resource as the first type.

As one embodiment, the meaning of the phrase "the first information block is used to determine the first time domain resource" comprises the following: the first information block configuring at least one of the symbols in the first time domain resource as the first type.

As one embodiment, the meaning of the phrase "the first information block is used to determine the first time domain resource" comprises the following: the first information block indicating the type of each symbol in the first time domain resource.

As one embodiment, the meaning of the phrase "the first information block is used to determine the first time domain resource" comprises the following: the first information block indicating that the type of each symbol in the first time domain resource is the first type.

As one embodiment, the meaning of the phrase "the first information block is used to determine the first time domain resource" comprises the following: the first information block indicating that the type of at least one symbol in the first time domain resource is the first type.

As one embodiment, if a symbol is configured as the first type, the sender of the first signaling simultaneously receives and sends wireless signals on the symbol.

As one embodiment, if a symbol is configured as the first type, the sender of the first signaling may simultaneously receive and send wireless signals on the symbol.

As one embodiment, if a symbol is not configured as the first type, the sender of the first signaling will either only receive or only send wireless signals on the symbol.

As one embodiment, the first type is one type in a first type set, where any symbol is configured as one type in the first type set, and the types in the first type set comprise the first type, uplink, and downlink.

As one sub-embodiment of the embodiment described above, the types in the first type set comprise flexible.

As one embodiment, the first type is different from uplink and downlink.

As one embodiment, the first type is different from uplink, downlink, and flexible.

**Embodiment 8**

Embodiment 8 exemplifies a schematic diagram in which a first information block is used to determine a second time domain resource, according to one embodiment of the present application, as shown in FIG. 8. In Embodiment 8, the first information block is used to determine a second time domain resource, where the second time domain resource comprises at least one symbol; the second time domain resource and the first time domain resource are mutually orthogonal.

As one embodiment, the first time domain resource comprises symbols that do not belong to the second time domain resource.

As one embodiment, the first time domain resource is composed of symbols that do not belong to the second time domain resource.

As one embodiment, the first information block indicates the second time domain resource.

As one embodiment, the meaning of the phrase "the first information block is used to determine the first time domain resource" comprises the following: the first information block implicitly indicates the first time domain resource by indicating the second time domain resource.

As one embodiment, the second time domain resource comprises a plurality of consecutive symbols.

As one embodiment, the second time domain resource comprises a plurality of non-consecutive symbols.

As one embodiment, the second time domain resource comprises at least one slot.

As one embodiment, the second time domain resource comprises at least one subframe.

As one embodiment, the sender of the first signaling either receives only wireless signals or sends only wireless signals in the second time domain resource.

As one embodiment, the sender of the first signaling either receives only wireless signals or sends only wireless signals in any symbol of the second time domain resource.

As one sub-embodiment of the embodiment described above, the second time domain resource comprises two symbols, where the sender of the first signaling receives only wireless signals in one of the symbols and sends only wireless signals in the other symbol of the two.

As one embodiment, the sender of the first signaling receives only wireless signals in any symbol of the second time domain resource.

As one embodiment, the sender of the first signaling sends only wireless signals in any symbol of the second time domain resource.

As one embodiment, the sender of the first signaling either receives only wireless signals or sends only wireless signals in at least one symbol of the second time domain resource.

As one embodiment, the sender of the first signaling either receives only wireless signals or sends only wireless signals in any symbol of the second time domain resource within the cell where the first signal is located.

As one embodiment, the second time domain resource comprises symbols that are used only for uplink transmission.

As one embodiment, the second time domain resource comprises symbols that are used only for downlink transmission.

As one embodiment, the second time domain resource comprises symbols that are used only for uplink transmission and symbols that are used only for downlink transmission.

As one embodiment, any symbol in the second time domain resource is used only for uplink transmission or only for downlink transmission.

As one sub-embodiment of the embodiment described above, there are two symbols in the second time domain resource, where one of the two symbols is used only for uplink transmission and the other of the two symbols is used only for downlink transmission.

As one embodiment, any symbol in the second time domain resource is used only for uplink transmission.

As one embodiment, any symbol in the second time domain resource is used only for downlink transmission.

As one embodiment, any symbol in the second time domain resource is simultaneously used only for uplink transmission or only for downlink transmission within the cell where the first signal is located.

As one embodiment, the first information block configures the symbols in the second time domain resource as a second type.

As one embodiment, the first information block configures each of the symbols in the second time domain resource as the second type.

As one embodiment, the first information block configures at least one of the symbols in the second time domain resource as the second type.

As one embodiment, the first information block configures the type of each of the symbols in the second time domain resource as the second type.

As one embodiment, if a symbol is configured as the second type, the sender of the first signaling will either only receive or only send wireless signals on the symbol.

As one embodiment, if a symbol is configured as the second type, the sender of the first signaling will only receive wireless signals on the symbol.

As one embodiment, if a symbol is configured as the second type, the sender of the first signaling will only send wireless signals on the symbol.

As one embodiment, if a symbol is not configured as the second type, the sender of the first signaling simultaneously receives and sends wireless signals on the symbol.

As one embodiment, the second type is one of uplink or downlink.

As one embodiment, the second type comprises uplink and downlink.

As one embodiment, the second type is one of uplink, downlink, or flexible.

As one embodiment, the second type is different from uplink, downlink, and flexible.

As one embodiment, the first information block configures the symbols in the second time domain resource as a third type or a fourth type.

As one embodiment, the first information block configures any symbol in the second time domain resource as the third type or the fourth type.

As one sub-embodiment of the embodiment described above, the second time domain resource comprises two symbols, where the first information block configures one of the two symbols as the third type and the other of the two symbols as the fourth type.

As one embodiment, if a symbol is configured as the third type, the sender of the first signaling will only receive wireless signals on the symbol.

As one embodiment, if a symbol is configured as the fourth type, the sender of the first signaling will only send wireless signals on the symbol.

As one embodiment, if a symbol is configured as neither the third type nor the fourth type, the sender of the first signaling simultaneously receives and sends wireless signals on the symbol.

As one embodiment, if a symbol is not configured as any one of the third type, the fourth type, or flexible, the sender of the first signaling simultaneously receives and sends wireless signals on the symbol.

As one embodiment, the third type is downlink, and the fourth type is uplink.

As one embodiment, the third type is different from uplink, downlink, and flexible; the fourth type is also different from uplink, downlink, and flexible.

As one embodiment, the first time domain resource pool comprises a plurality of symbols, and the first information block indicates the first time domain resource from the first time domain resource pool.

As one sub-embodiment of the embodiment described above, the first information block indicates that only the symbols in the first time domain resource within the first time domain resource pool are configured as the first type.

As one sub-embodiment of the embodiment described above, the second time domain resource is composed of all symbols in the first time domain resource pool except those of the first time domain resource.

As one embodiment, the first time domain resource pool comprises a plurality of symbols, and the first information block indicates the second time domain resource from the first time domain resource pool.

As one sub-embodiment of the embodiment described above, the first information block indicates that only the symbols in the second time domain resource within the first time domain resource pool are configured as the second type.

As one sub-embodiment of the embodiment described above, the first information block indicates that only the symbols in the second time domain resource within the first time domain resource pool are configured as the third type or the fourth type.

As one sub-embodiment of the embodiment described above, the first time domain resource is composed of all symbols in the first time domain resource pool except those of the second time domain resource.

### Embodiment 9

Embodiment 9 exemplifies a schematic diagram showing, according to one embodiment of the present application, that the candidate overhead from the first candidate overhead set that corresponds to the first overhead is related to whether the first time window overlaps with the first time domain resource, as shown in FIG. 9. In Embodiment 9, the first overhead is one of the candidate overheads in the first candidate overhead set, where the first candidate overhead set comprises at least a first candidate overhead and a second candidate overhead; the candidate overhead from the first candidate overhead set that corresponds to the first overhead is related to whether the first time window overlaps with the first time domain resource.

As one embodiment, the candidate overhead from the first candidate overhead set that corresponds to the first overhead depends on whether the first time window overlaps with the first time domain resource.

As one embodiment, the first node determines the candidate overhead from the first candidate overhead set that corresponds to the first overhead based on whether the first time window overlaps with the first time domain resource.

As one embodiment, the candidate overhead from the first candidate overhead set that corresponds to the first overhead depends on whether the first time window belongs to the first time domain resource.

As one embodiment, the first node determines the candidate overhead from the first candidate overhead set that corresponds to the first overhead based on whether the first time window belongs to the first time domain resource.

As one embodiment, the candidate for the first overhead is the first candidate overhead set.

As one embodiment, the candidate for the first overhead is composed of the first candidate overhead set.

As one embodiment, each candidate overhead in the first candidate overhead set is a candidate for the first overhead.

As one embodiment, each candidate overhead in the first candidate overhead set is a non-negative integer.

As one embodiment, each candidate overhead in the first candidate overhead set is a non-negative real number.

As one embodiment, the first candidate overhead set is configurable.

As one embodiment, any candidate overhead in the first candidate overhead set is configurable.

As one embodiment, any two candidate overheads in the first candidate overhead set are respectively configurable.

As one embodiment, the candidate overheads in the first candidate overhead set are all distinct from each other.

As one embodiment, there are two equal candidate overheads in the first candidate overhead set.

As one embodiment, there is at least one configurable candidate overhead in the first candidate overhead set.

As one embodiment, there is one candidate overhead in the first candidate overhead set that does not require configuration.

As one embodiment, there is one candidate overhead in the first candidate overhead set that does not require explicit configuration.

As one embodiment, there is one candidate overhead in the first candidate overhead set that is fixed.

As one embodiment, there is one candidate overhead in the first candidate overhead set that is default.

As one embodiment, there is one candidate overhead in the first candidate overhead set, and this one candidate overhead does not require configuration when the other candidate overheads in the first candidate overhead set are determined.

As one embodiment, the first candidate overhead set is composed of the first candidate overhead and the second candidate overhead.

As one embodiment, the first candidate overhead set comprises at least one other candidate overhead in addition to the first candidate overhead and the second candidate overhead.

**Embodiment 10**

Embodiment 10 exemplifies a schematic diagram showing, according to one embodiment of the present application, that the candidate overhead from the first candidate overhead set that corresponds to the first overhead is related to whether the first time window overlaps with the first time domain resource, as shown in FIG. 10. In Embodiment 10, the first overhead is either the first candidate overhead or the second candidate overhead, and whether the first overhead is the first candidate overhead or the second candidate overhead is related to whether the first time window overlaps with the first time domain resource.

As one embodiment, the first overhead is either the first candidate overhead or the second candidate overhead, and whether the first overhead is the first candidate overhead or the second candidate overhead depends on whether the first time window overlaps with the first time domain resource.

As one embodiment, when the first time window overlaps with the first time domain resource, the first overhead is the first candidate overhead.

As one embodiment, when the first time window is orthogonal to the first time domain resource, the first overhead is the second candidate overhead.

As one embodiment, when the first time window belongs to the first time domain resource overlap, the first overhead is the first candidate overhead.

As one embodiment, when each symbol in the first time window belongs to the first time domain resource, the first overhead is the first candidate overhead.

As one embodiment, when one symbol in the first time window does not belong to the first time domain resource, the first overhead is the second candidate overhead.

As one embodiment, the first candidate overhead and the second candidate overhead are respectively non-negative integers.

As one embodiment, the first candidate overhead and the second candidate overhead are respectively non-negative real numbers.

As one embodiment, the first candidate overhead is not equal to the second candidate overhead.

As one embodiment, the first candidate overhead is smaller than the second candidate overhead.

As one embodiment, the first candidate overhead is greater than the second candidate overhead.

As one embodiment, the first candidate overhead is equal to the second candidate overhead.

As one embodiment, the first candidate overhead is configurable.

As one embodiment, the second candidate overhead is configurable.

As one embodiment, the first candidate overhead and the second candidate overhead are respectively configurable.

As one embodiment, the first candidate overhead and the second candidate overhead are respectively configurable by two different RRC IEs.

As one embodiment, the first candidate overhead and the second candidate overhead are respectively configurable by two different fields of one RRC IE.

As one embodiment, the first candidate overhead and the second candidate overhead are respectively configurable by the same field of the same RRC IE.

As one embodiment, the first candidate overhead and the second candidate overhead are respectively configurable by two different higher layer parameters.

As one embodiment, one of the first candidate overhead and the second candidate overhead is default.

As one embodiment, one of the first candidate overhead and the second candidate overhead does not require explicit configuration.

As one embodiment, one of the first candidate overhead and the second candidate overhead does not require configuration.

As one embodiment, one of the first candidate overhead and the second candidate overhead is fixed.

As one embodiment, when one of the first candidate overhead and the second candidate overhead is determined, the other of the first candidate overhead and the second candidate overhead does not require explicit configuration.

As one embodiment, the first candidate overhead is default.

As one embodiment, the first candidate overhead does not require configuration.

As one embodiment, the first candidate overhead is fixed.

As one embodiment, when the second candidate overhead is determined, the first candidate overhead does not require explicit configuration.

As one embodiment, when one of the first candidate overhead and the second candidate overhead is configurable by an RRC IE, and the other of the first candidate overhead and the second candidate overhead is configurable by an MAC CE.

As one embodiment, when one of the first candidate overhead and the second candidate overhead is configurable by higher layer signaling, and the other of the first candidate overhead and the second candidate overhead is configurable by DCI.

As one embodiment, the first candidate overhead is indicated by a first higher layer parameter.

As one embodiment, when the first higher layer parameter is configured, the first candidate overhead is indicated by the first higher layer parameter; and when the first higher layer parameter is not configured, the first candidate overhead is equal to 0.

As one embodiment, the name of the first higher layer parameter includes "xoverhead".

As one embodiment, the second candidate overhead is indicated by a second higher layer parameter.

As one embodiment, when the second higher layer parameter is configured, the second candidate overhead is indicated by the first higher layer parameter; and when the first higher layer parameter is not configured, the first candidate overhead is equal to 0.

As one embodiment, the name of the second higher layer parameter includes "xoverhead".

As one embodiment, the second higher layer parameter is carried by the xOverhead field in the *PDSCH-ServingCellConfig* IE.

As one embodiment, the second higher layer parameter is carried by the xOverhead field in the *PUSCH-ServingCellConfig* IE.

As one embodiment, the first higher layer parameter (if configured) and the second higher layer parameter (if configured) are respectively carried by different IEs.

As one embodiment, the first higher layer parameter (if configured) and the second higher layer parameter (if configured) are respectively carried by different fields in the same IE.

As one embodiment, the first higher layer parameter (if configured) and the second higher layer parameter (if configured) are carried by the same field in the same IE.

## Embodiment 11

Embodiment 11 exemplifies a schematic diagram showing, according to one embodiment of the present application, that the candidate overhead from the first candidate overhead set that corresponds to the first overhead is related to whether the first time window overlaps with the first time domain resource, as shown in FIG. 11. In Embodiment 11, the first candidate overhead set comprises a first candidate overhead subset and a second candidate overhead subset; whether the first overhead belongs to the first candidate overhead subset or the second candidate overhead subset is related to whether the first time window overlaps with the first time domain resource.

As one embodiment, the first overhead belongs to either the first candidate overhead subset or the second candidate overhead subset, and whether the first overhead is the first candidate overhead subset or the second candidate overhead subset depends on whether the first time window overlaps with the first time domain resource.

As one embodiment, the first candidate overhead subset and the second candidate overhead subset respectively comprise at least one candidate overhead.

As one embodiment, any candidate overhead in the first candidate overhead subset is a non-negative real number, and any candidate overhead in the second candidate overhead subset is a non-negative real number.

As one embodiment, there is no candidate overhead that simultaneously belongs to both the first candidate overhead subset and the second candidate overhead subset.

As one embodiment, there is at least one candidate overhead that simultaneously belongs to both the first candidate overhead subset and the second candidate overhead subset.

As one embodiment, there is at least one candidate overhead that belongs to only one of the first candidate overhead subset or the second candidate overhead subset.

As one embodiment, when the first time window overlaps with the first time domain resource, the first overhead belongs to the first candidate overhead subset.

As one embodiment, when the first time window overlaps with the first time domain resource, the first overhead belongs to the second candidate overhead subset.

As one embodiment, when the first time window belongs to the first time domain resource, the first overhead belongs to the first candidate overhead subset.

As one embodiment, when each symbol in the first time window belongs to the first time domain resource, the first overhead belongs to the first candidate overhead subset.

As one embodiment, when one symbol in the first time window does not belong to the first time domain resource, the first overhead belongs to the second candidate overhead subset.

As one embodiment, the first candidate overhead subset comprises only one candidate overhead.

As one embodiment, the first candidate overhead subset comprises a plurality of candidate overheads.

As one embodiment, the second candidate overhead subset comprises only one candidate overhead.

As one embodiment, the second candidate overhead subset comprises a plurality of candidate overheads.

As one embodiment, the first candidate overhead subset comprises the first candidate overheads and the second candidate overhead subset comprises the second candidate overheads.

As one embodiment, the first overhead belongs to a target candidate overhead subset of the first candidate overhead subset and the second candidate overhead subset, and the first signaling is used to determine the first overhead from the target candidate overhead subset.

As one sub-embodiment of the embodiment described above, the first signaling indicates the first overhead from the target candidate overhead subset.

As one sub-embodiment of the embodiment described above, the RNTI of the first signaling is used to determine the first overhead from the target candidate overhead subset.

As one sub-embodiment of the embodiment described above, the format of the first signaling is used to determine the first overhead from the target candidate overhead subset.

## Embodiment 12

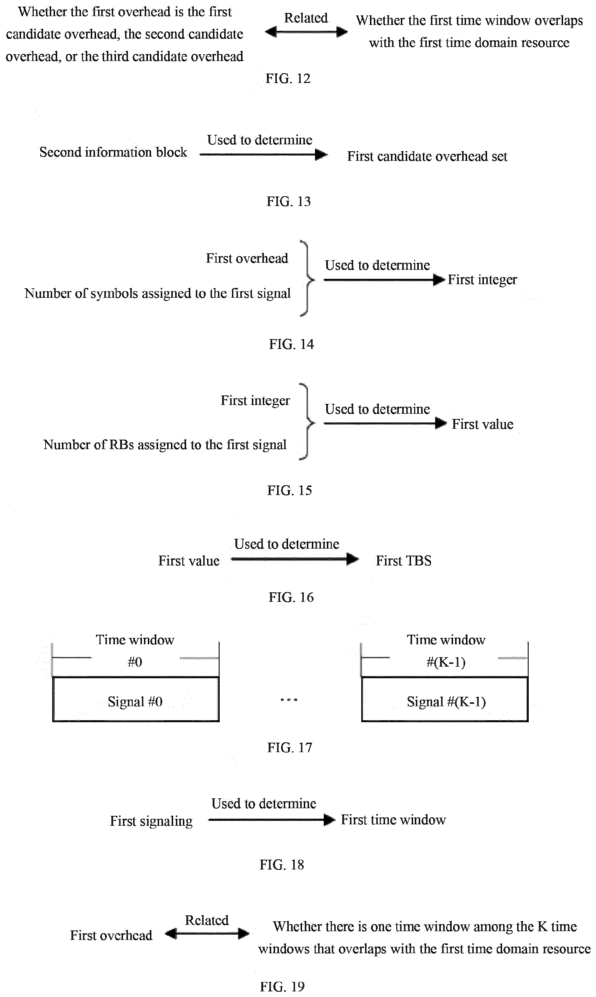

Embodiment 12 exemplifies a schematic diagram showing, according to one embodiment of the present application, that the candidate overhead from the first candidate overhead set that corresponds to the first overhead is related to whether the first time window overlaps with the first time domain resource, as shown in FIG. 12. In Embodiment 12, the first candidate overhead set comprises the first candidate overhead, second candidate overhead, and third candidate overhead; the first overhead is the first candidate overhead, and the second candidate overhead or the third candidate overhead is related to whether the first time window overlaps with the first time domain resource.

As one embodiment, when the first time window belongs to the first time domain resource, the first overhead is the first candidate overhead.

As one embodiment, when the first time window is orthogonal to the first time domain resource, the first overhead is the second candidate overhead.

As one embodiment, when some symbols in the first time window belong to the first time domain resource and some symbols do not, the first overhead is the third candidate overhead.

As one embodiment, the first candidate overhead, the second candidate overhead, and the third candidate overhead may be respectively configurable.

As one embodiment, the first candidate overhead, the second candidate overhead, and the third candidate overhead are respectively configurable.

As one embodiment, one of the first candidate overhead, the second candidate overhead, and the third candidate overhead is default.

As one embodiment, one of the first candidate overhead, the second candidate overhead, and the third candidate overhead does not require explicit configuration.

As one embodiment, one of the first candidate overhead, the second candidate overhead, and the third candidate overhead does not require configuration.

As one embodiment, one of the first candidate overhead, the second candidate overhead, and the third candidate overhead is fixed.

As one embodiment, the first candidate overhead, the second candidate overhead, and the third candidate overhead are all distinct from each other.

As one embodiment, there are two equal candidate overheads among the first candidate overhead, the second candidate overhead, and the third candidate overhead.

## Embodiment 13

Embodiment 13 exemplifies a schematic diagram of a second information block according to one embodiment of the present application; as shown in FIG. 13. In Embodiment 13, the second information block is used to determine the first candidate overhead set.

As one embodiment, the second information block is carried by higher layer signaling.

As one embodiment, the second information block is carried by RRC signaling.

As one embodiment, the second information block comprises information from all or part of the fields in an RRC IE.

As one embodiment, the second information block comprises information from all or part of the fields in each RRC IE (Information Element) among a plurality of RRC IEs.

As one embodiment, the second information block comprises information from all or part of the fields in the *PDSCH-ServingCellConfig* IE.

As one embodiment, the second information block comprises information from the xOverhead field in the *PDSCH-ServingCellConfig* IE.

As one embodiment, the second information block comprises information from all or part of the fields in the *PUSCH-ServingCellConfig* IE.

As one embodiment, the second information block comprises information from the xOverhead field in the *PUSCH-ServingCellConfig* IE.

As one embodiment, the second information block comprises information from all or part of the fields in the *ServingCellConfig IE.*

As one embodiment, the second information block comprises all or part of the information from the pdsch-ServingCellConfig field in the *ServingCellConfig* IE.

As one embodiment, the second information block comprises all or part of the information from the uplink Config field in the *ServingCellConfig* IE.

As one embodiment, the second information block comprises information from all or part of the fields in the *PDSCH-ConfigBroadcast* IE.

As one embodiment, the second information block comprises all or part of the information from the fields in the *BWP-Downlink* IE.

As one embodiment, the second information block comprises all or part of the information from the fields in the *BWP-Uplink* IE.

As one embodiment, the second information block is carried by at least one RRC IE.

As one embodiment, the second information block is carried by the MAC CE.

As one embodiment, the second information block comprises the MAC CE.

As one embodiment, the second information block is carried by DCI.

As one embodiment, the second information block comprises DCI.

As one embodiment, the second information block is jointly carried by RRC signaling and MAC CE.

As one embodiment, the second information block is jointly carried by higher layer signaling and DCI.

As one embodiment, the second information block comprises the first information sub-block and the second information sub-block, where the first information sub-block is used to determine the first candidate overhead, and the second information sub-block is used to determine the second candidate overhead.

As one sub-embodiment of the embodiment described above, the first information sub-block and the second information sub-block are respectively carried by two different RRC IEs.

As one sub-embodiment of the embodiment described above, the first information sub-block and the second information sub-block are respectively carried by two different fields of the same RRC IE.

As one sub-embodiment of the embodiment described above, the first information sub-block and the second information sub-block are respectively carried by the same field of the same RRC IE.

**Embodiment 14**

Embodiment 14 exemplifies a schematic diagram of how the first overhead and the number of symbols assigned to the first signal are jointly used to determine a first integer according to one embodiment of the present application, as shown in FIG. 14;

As one embodiment, the first overhead and the number of symbols assigned to the first signal are jointly used by the first node to determine the first integer.

As one embodiment, the first integer is the number of REs (Resource Elements) assigned to the first signal in one PRB (Physical Resource Block).

As one embodiment, the first integer is the number of REs assigned to the PDSCH carrying the first signal in one PRB.

As one embodiment, the first integer is the number of REs assigned to the PUSCH carrying the first signal in one PRB.

As one embodiment, the first integer is $N'_{RE}$.

As one embodiment, the definition of $N'_{RE}$ is provided in 3GPP TS38.214.

As one embodiment, the first integer varies with the first overhead.

As one embodiment, the first integer decreases as the first overhead increases.

As one embodiment, the first integer and the first overhead are linearly related, and the linear coefficient between the first integer and the first overhead is -1.

As one embodiment, the number of symbols assigned to the first signal is equal to the number of symbols included in the first time window.

As one embodiment, the number of symbols assigned to the first signal is the number of symbols assigned to the PDSCH carrying the first signal.

As one embodiment, the number of symbols assigned to the first signal is the number of symbols assigned to the PUSCH carrying the first signal.

As one embodiment, the number of symbols assigned to the first signal is the number of symbols assigned to the PDSCH carrying the first signal within a slot.

As one embodiment, the number of symbols assigned to the first signal is the number of symbols assigned to the PUSCH carrying the first signal within a slot.

As one embodiment, the number of symbols assigned to the first signal is a positive integer not greater than 14.

As one embodiment, the number of symbols assigned to the first signal is indicated by the first signaling.

As one embodiment, the first signaling indicates the first number of consecutive symbols, and the number of symbols assigned to the first signal is equal to the first number consecutive symbols.

As one sub-embodiment of the embodiment described above, the "Time domain resource assignment" field of the first signaling's DCI indicates a row in the resource assignment table, and the row includes a first SLIV (Start and Length Indicator Value), which is used to determine the first starting symbol and the first number of consecutive symbols.

As one sub-embodiment of the embodiment described above, the "Time domain resource assignment" field of the first signaling's DCI indicates a row in the resource assignment table, and the length in the row indicates the first number of consecutive symbols.

As one embodiment, the first number of consecutive symbols is a positive integer.

As one embodiment, the first starting symbol is a non-negative integer.

As one embodiment, the number of first consecutive symbols is not greater than 14 minus the first starting symbol.

As one embodiment, the first integer varies with the number of symbols assigned to the first signal.

As one embodiment, the first integer increases with the increase in the number of symbols assigned to the first signal.

As one embodiment, the first integer and the number of symbols assigned to the first signal are linearly related, and the linear coefficient between the first integer and the number of symbols assigned to the first signal is 12.

As one embodiment, the first integer and the second overhead are linearly related, and the linear coefficient between the first integer and the second overhead is -1; the second overhead is the number of REs per PRB during the period in which the DMRS is scheduled.

As one sub-embodiment of the embodiment described above, the second overhead comprises the overhead of DMRS CDM groups without data.

As one embodiment, the first integer equals the product of 12 and the number of symbols assigned to the first signal, minus the second overhead and minus the first overhead.

As one embodiment, the first node transmits the K signals in the K time windows, with the K signals based on PUSCH repetition Type B, and the number of symbols assigned to the first signal equals the number of undivided consecutive symbols in a nominal repetition.

As one embodiment, the first node transmits the K signals in the K time windows, with the K signals based on PUSCH repetition Type B, and the second overhead is determined under the assumption that the number of symbols assigned to the first signal equals the number of undivided consecutive symbols in a nominal repetition.

**Embodiment 15**

Embodiment 15 exemplifies a schematic diagram of how the first integer and the number of RBs assigned to the first signal are jointly used to determine a first value according to one embodiment of the present application, as shown in FIG. 15;

As one embodiment, the first integer and the number of RBs assigned to the first signal are jointly used by the first node to determine the first value.

As one embodiment, the first value is a positive real number.

As one embodiment, the first real number varies with the first integer.

As one embodiment, the first value increases with the increase of the first integer.

As one embodiment, when the first integer equals A3, the first value equals B3; when the first integer equals A4, the first value equals B4; where A3 is greater than A4, and B3 is not greater than B4.

As one embodiment, the RB refers to: Resource Blocks.

As one embodiment, RBs comprise PRBs (Physical Resource Blocks).

As one embodiment, the number of RBs assigned to the first signal is the total number of RBs assigned to the PDSCH carrying the first signal.

As one embodiment, the number of RBs assigned to the first signal is the total number of RBs assigned to the PUSCH carrying the first signal.

As one embodiment, the first value varies with the number of RBs assigned to the first signal.

As one embodiment, the first value increases with the increase in the number of RBs assigned to the first signal.

As one embodiment, the first value equals the third value multiplied by the first target bitrate, then multiplied by the first modulation order, and then multiplied by the first number of layers; the third value equals the minimum value between the first integer and 156, multiplied by the number of RBs assigned to the first signal.

As one embodiment, the first value equals the third value multiplied by the first target bitrate, then multiplied by the first modulation order, and then multiplied by the first number of layers; the third value equals the minimum value between the first integer and 156, multiplied by the number of RBs assigned to the first signal, and then multiplied by N, where N is indicated by the higher layer parameter "numberOfSlotsTBoMS".

As one embodiment, the first signaling indicates the first target bitrate, the first modulation order, and the first number of layers.

As one embodiment, the Modulation and Coding Scheme in the DCI field of the first signaling indicates the first target bitrate and the first modulation order.

As one embodiment, the first node sends the first signal; the SRS resource indicator in the DCI field of the first signaling indicates the first number of layers.

As one embodiment, the first node sends the first signal; the precoding information and number of layers in the DCI field of the first signaling indicates the first number of layers.

As one embodiment, the first node receives the first signal; the antenna port(s) in the DCI field of the first signaling indicates the first number of layers.

As one embodiment, the first target bitrate is the target bitrate of the first signal, the first modulation order is the modulation order of the first signal, and the first number of layers is the number of layers of the first signal.

**Embodiment 16**

Embodiment 16 exemplifies a schematic diagram of how the first value is used to determine a first TBS according to one embodiment of the present application, as shown in FIG. 16.

As one embodiment, the first value is used by the first node to determine the first TBS.

As one embodiment, the first TBS varies with the first value.

As one embodiment, when the first value equals C1, the first TBS equals D1; when the first value equals C2, the first TBS equals D2; where C1 is greater than C2, and D1 is not greater than D2.

As one embodiment, the first TBS equals a candidate TBS from a first candidate TBS set that is not less than a second integer and closest to the second integer; the first candidate TBS set comprises a plurality of candidate TBSs; the first value is used to determine the second integer.

As one sub-embodiment of the embodiment described above, the second integer equals the maximum of a third integer and 24, where the third integer is obtained by dividing the first value by a second parameter, rounding down the result, and then multiplying by the second parameter; the second parameter is related to the first value.

As one reference embodiment of the sub-embodiment described above, the second parameter equals $2^{max(3,\lfloor log_2(\text{the first value})\rfloor - 6)}$.

As one sub-embodiment of the embodiment described above, the second integer equals $max\left(24, 2^n \cdot \left\lfloor \frac{\text{the first value}}{2^n} \right\rfloor\right)$, wherein $n = max(3, \lfloor log_2(\text{the first value})\rfloor - 6)$.

As one sub-embodiment of the embodiment described above, the first candidate TBS set comprises all TBSs in Table 5.1.3.2-1 of 3GPP TS 38.214 (V16.8.0).

As one sub-embodiment of the embodiment described above, the first candidate TBS set is Table 5.1.3.2-1 of 3GPP TS 38.214 (V16.8.0).

As one sub-embodiment of the embodiment described above, the first value is less than or equal to 3,824.

As one embodiment, the first TBS equals the product obtained by rounding up the sum of a fourth integer and 24 divided by a third parameter, and then multiplying by a third parameter, minus 24; the fourth integer equals the maximum of a fifth integer and 3,840, and the first value is used to determine the fifth integer.

As one sub-embodiment of the embodiment described above, the fifth integer equals the result of rounding up the difference between the first value and 24 divided by a fourth parameter, and then multiplying by the fourth parameter; the fourth parameter is related to the first value.

As one reference embodiment of the sub-embodiment described above, the fourth parameter equals $2^{\lfloor log_2(\text{the first value}-24)\rfloor-5}$.

As one reference embodiment of the sub-embodiment described above, the rounding refers to the "round" function.

As one sub-embodiment of the embodiment described above, the first TBS equals $\text{the third parameter} \cdot \left\lceil \frac{\text{the fourth integer}+24}{\text{the third parameter}} \right\rceil - 24$, wherein, the fourth integer equals $max(3840, 2^n \times round\left(\frac{\text{the first value}-24}{2^n}\right))$, wherein $n = \lfloor log_2(\text{the first value} - 24)\rfloor - 5$.

As one sub-embodiment of the embodiment described above, the third parameter is related to the target bitrate.

As one sub-embodiment of the embodiment described above, when the target bitrate is less than or equals 1/4, the third parameter equals $8 \cdot \left\lceil \frac{\text{the fourth integer}+24}{3816} \right\rceil$.

As one sub-embodiment of the embodiment described above, when the target bitrate is greater than 1/4 and the fourth parameter is greater than 8,424, the third parameter equals $8 \cdot \left\lceil \frac{\text{the fourth integer}+24}{8424} \right\rceil$.

As one sub-embodiment of the embodiment described above, when the target bitrate is greater than 1/4 and the fourth parameter is not greater than 8,424, the third parameter equals 8.

As one sub-embodiment of the embodiment described above, the first value is greater than 3,824.

## Embodiment 17

Embodiment 17 exemplifies a schematic diagram of K time windows and K signals according to one embodiment of the present application, as shown in FIG. 17. In Embodiment 17, the first node receives K signals in K time windows, or respectively sends K signals in K time windows; wherein the first signaling is used to determine the K time windows; the first time window is one of the K time windows, and (K-1) time windows are all the time windows among the K time windows except for the first time window; the first signal is one of the K signals, and (K-1) signals are all the signals among the K signals except for the first signal; each signal among the K signals carries the first TB; the first overhead is related to whether there is one time window among the K time windows that overlaps with the first time domain resource. In FIG. 17, the K time windows are represented as time window #0, ..., time window #(K-1); the K signals are represented as signal #0, ..., signal #(K-1).

As one embodiment, the first node respectively receives the K signals in the K time windows.

As one embodiment, the first node respectively sends the K signals in the K time windows.

As one embodiment, the first node receives the first signal in the first time window and respectively receives the (K-1) signals in the (K-1) time windows; alternatively, the first node sends the first signal in the first time window and respectively sends the (K-1) signals in the (K-1) time windows.

As one embodiment, any time window among the K time windows comprises at least one symbol.

As one embodiment, any time window among the K time windows comprises one symbol or a plurality of consecutive symbols.

As one embodiment, any time window among the K time windows is composed of one symbol or a plurality of consecutive symbols.

As one embodiment, any two time windows among the K time windows are mutually orthogonal in the time domain.

As one embodiment, the K time windows are respectively assigned to the K repetitions of the first TB.

As one embodiment, the K time windows are respectively assigned to the K actual repetitions of the first TB.

As one embodiment, the K time windows are respectively assigned to the K nominal repetitions of the first TB.

As one embodiment, the first node respectively sends the K signals in the K time windows; the K time windows are respectively assigned to the K PUSCHs scheduled by the first signaling.

As one embodiment, the first node respectively sends the K signals in the K time windows; the K time windows are respectively assigned to the K PDSCHs scheduled by the first signaling.

As one embodiment, the K time windows respectively belong to K different slots.

As one embodiment, the K time windows respectively belong to K consecutive slots.

As one embodiment, there are two adjacent time windows among the K time windows, with each occupying two non-consecutive slots.

As one embodiment, two time windows among the K time windows occupy the same slot.

As one embodiment, the K time windows are continuous in the time domain.

As one embodiment, at least two adjacent time windows among the K time windows are discontinuous in the time domain.

As one embodiment, the K signals are respectively the K repetitions of the first TB.

As one embodiment, the K signals are respectively the K actual repetitions of the first TB.

As one embodiment, the K signals are respectively the K nominal repetitions of the first TB.

As one embodiment, the K signals are respectively the K repetitions of the first TB scheduled by the first signaling.

As one embodiment, the K signals correspond to the same HARQ process number.

As one embodiment, the K signals employ the same MCS.

As one embodiment, two of the K signals correspond to different RVs.

As one embodiment, the K signals correspond to the same RV.

As one embodiment, the K signals correspond to the same NDI.

As one embodiment, the K signals respectively comprise baseband signals.

As one embodiment, the K signals respectively comprise wireless signals.

As one embodiment, the K signals respectively comprise radio frequency signals.

As one embodiment, the first node transmits the K signals in the K time windows, with the K signals based on PUSCH repetition Type A.

As one embodiment, the first node transmits the K signals in the K time windows, with the K signals based on PUSCH repetition Type B.

As one embodiment, the first node respectively sends the K signals in the K time windows, where the K signals are based on TB processing over multiple slots.

As one embodiment, the first signaling indicates a first time window set, which comprises at least one time window; the first time window set is used to determine the K time windows; any time window among the K time windows is an actual repetition, and any time window in the first time window set is a nominal repetition.

As one sub-embodiment of the embodiment described above, after determining the invalid symbols, the remaining symbols in each nominal repetition are potentially valid symbols. For any nominal repetition, if the number of potentially valid symbols is greater than 0, the nominal repetition comprises one or a plurality of actual repetitions. Each actual repetition among the one or plurality of actual repetitions is composed of a set of consecutive potentially valid symbols within all potentially valid symbols in one slot.

As one reference embodiment of the sub-embodiment described above, the invalid symbols are symbols that are invalid for PUSCH repetition Type B transmission.

As one reference embodiment of the sub-embodiment described above, the potentially valid symbols are symbols that are potentially valid for PUSCH repetition Type B transmission.

As one sub-embodiment of the embodiment described above, the K time windows do not include actual repetitions with a symbol count of 1.

As one sub-embodiment of the embodiment described above, the first signaling is a DCI, and the "Time domain resource assignment" field of the first signaling's DCI indicates the first time window set.

As one sub-embodiment of the embodiment described above, the first signaling indicates the number of time windows included in the first time window set.

As one embodiment, the "Time domain resource assignment" field of the first signaling's DCI is used to determine the K time windows.

As one embodiment, the "Time domain resource assignment" field of the first signaling's DCI is used to determine the K time windows.

As one embodiment, the first signaling indicates the K.

As one embodiment, the K is configured by higher layer signaling.

## Embodiment 18

Embodiment 18 exemplifies a schematic diagram of a first signaling used to determine the first time window according to one embodiment of the present application, as shown in FIG. 18. In Embodiment 18, the first signaling indicates a row in the resource assignment table, where the row is used to determine the first slot offset, the first starting symbol, and the first number of consecutive symbols. The first slot offset and the first starting symbol are non-negative integers, and the first number of consecutive symbols is a positive integer. The first slot offset, the first starting symbol, and the first number of consecutive symbols are jointly used to determine the first time window. The first slot offset and $n_1$ are jointly used to determine the slot $K_s$, and the first signaling is transmitted in the slot $n_1$.

As one embodiment, the first signaling is a DCI, and the "Time domain resource assignment" field of the first signaling's DCI indicates the first row.

As one embodiment, the row comprises the first SLIV, which is used to determine the first starting symbol and the first number of consecutive symbols.

As one embodiment, the row comprises the first starting symbol and the first number of consecutive symbols.

As one embodiment, the $K_s$ equals the sum of the $n_1$ and the first slot offset.

As one embodiment, the $K_s$ equals $\left\lfloor n_1 \cdot \frac{2^{\mu_1}}{2^{\mu_2}} \right\rfloor + the\ first\ slot\ offset$ ; wherein $\mu_1$ and $\mu_2$ are the subcarrier spacing configuration of the first signaling and the subcarrier spacing configuration of the first signal, respectively.

As one embodiment, the first time window belongs to the slot $K_s$.

As one embodiment, the first starting symbol indicates the starting symbol of the first time window.

As one embodiment, the starting symbol of the first time window relative to the start of the slot $K_s$ is symbol S, where S equals the first starting symbol.

As one embodiment, the number of symbols included in the first time window equals the first number of consecutive symbols.

As one embodiment, the first slot offset, the first starting symbol, and the first number of consecutive symbols are jointly used to determine the K time windows.

As one embodiment, the earliest time window among the K time windows starts in the slot $K_s$.

As one embodiment, the first starting symbol indicates the starting symbol of each time window among the K time windows.

As one embodiment, the starting symbol of each time window among the K time windows, relative to the start of the slot, is symbol S, where S equals the first starting symbol.

As one embodiment, the K time windows respectively belong to K different slots.

As one embodiment, the K time windows respectively belong to K consecutive slots.

As one embodiment, K is equal to 2, and the K time windows belong to the same slot. The earliest symbol of the later time window among the K time windows starts after K0 symbols following the last symbol of the earliest time window; K0 is indicated by the higher layer parameter "StartingSymbolOffsetK", or K0 is equal to 0.

As one embodiment, each of the K time windows comprises a number of symbols equal to the first number of consecutive symbols.

As one embodiment, the first slot offset, the first starting symbol, and the first number of consecutive symbols are jointly used to determine the first time window set.

As one embodiment, the earliest time window in the first time window set starts at the slot $K_s$, and the n th time window in the first time window set start at the slot $\left(K_s + \left\lfloor \frac{the\ first\ starting\ symbol + n \cdot the\ first\ number\ of\ consecutive\ symbols}{fifth\ parameter} \right\rfloor\right)$ and ends at the slot $\left(K_s + \left\lfloor \frac{the\ first\ starting\ symbol + (n+1) \cdot the\ first\ number\ of\ consecutive\ symbols - 1}{fifth\ parameter} \right\rfloor\right)$. The starting symbol of the nth time window in the first time window set relative to the slot start is *mod*(the first starting symbol + $n \cdot$ the first number of consecutive symbols, the fifth parameter), the ending symbol of the nth time window in the first time window set relative to the slot start is *mod*(the first starting symbol + ($n$ + 1)· the first number of consecutive symbols - 1, the fifth parameter); wherein $n$ = 0, ..., the number of time windows included in the first time window set minus 1; the fifth parameter is the number of symbols included in each slot.

As one embodiment, the number of symbols included in each time window of the first time window set is equal to the first number of consecutive symbols.

As one embodiment, the resource assignment table is a PDSCH time domain resource assignment table.

As one embodiment, the resource assignment table is the default PDSCH time domain resource allocation A.

As one embodiment, the resource assignment table is the default PDSCH time domain resource allocation B.

As one embodiment, the resource assignment table is the default PDSCH time domain resource allocation C.

As one embodiment, the resource assignment table is configured by the *PDSCH-TimeDomainResourceAllocationList*.

As one embodiment, the resource assignment table is configured by the first field in the *PDSCH-Config* IE, where the name of the first field comprises *"pdsch-TimeDomainAllocationList"*

As one embodiment, the resource assignment table is configured by the second field in the *PDSCH-ConfigCommon* IE, where the name of the second field comprises *"pdsch-TimeDomainAllocationList"*

As one embodiment, the resource assignment table is a PUSCH time domain resource assignment table.

As one embodiment, the resource assignment table is configured by the *PUSCH-TimeDomainResourceAllocationList*.

As one embodiment, the resource assignment table is configured by the third field in the *PUSCH-Config* IE, where the name of the third field comprises *"pusch-TimeDomainAllocationList"*

As one embodiment, the resource assignment table is configured by the fourth field in the *PUSCH-ConfigCommon* IE, where the name of the fourth field comprises *"pusch-TimeDomainAllocationList"*

**Embodiment 19**

Embodiment 19 exemplifies a schematic diagram showing, according to one embodiment of the present application, that the first overhead is related to whether there is one time window among the K time windows that overlaps with the first time domain resource, as shown in FIG. 19.

As one embodiment, the first overhead depends on whether there is one time window among the K time windows that overlaps with the first time domain resource.

As one embodiment, whether there is one time window among the K time windows that overlaps with the first time domain resource is used to determine the first overhead.

As one embodiment, the candidate overhead from the first candidate overhead set that corresponds to the first overhead is related to whether there is one time window among the K time windows that overlaps with the first time domain resource.

As one embodiment, when at least one time window among the K time windows overlaps with the first time domain resource, the first overhead is the first candidate overhead.

As one embodiment, when each time window among the K time windows is orthogonal to the first time domain resource, the first overhead is the second candidate overhead.

As one embodiment, the meaning of the sentence "the first overhead is related to whether there is one time window among the K time windows that overlaps with the first time domain resource" comprises: the first overhead being related to whether there is one time window among the K time windows that belongs to the first time domain resource.

As one embodiment, the first overhead depends on whether there is one time window among the K time windows that belongs to the first time domain resource.

As one embodiment, whether there is one time window among the K time windows that belongs to the first time domain resource is used to determine the first overhead.

As one embodiment, the candidate overhead from the first candidate overhead set that corresponds to the first overhead is related to whether there is one time window among the K time windows that belongs to the first time domain resource.

As one embodiment, when at least one time window among the K time windows belongs to the first time domain resource, the first overhead is the first candidate overhead.

As one embodiment, when each time window among the K time windows comprises at least one symbol that does not belong to the first time domain resource, the first overhead is the second candidate overhead.

As one embodiment, the meaning of the sentence "the first overhead is related to whether there is one time window among the K time windows that overlaps with the first time domain resource" comprises: the first overhead being related to whether there is one time window among the K time windows that comprises at least one symbol that does not belong to the first time domain resource.

As one embodiment, the first overhead depends on whether there is one time window among the K time windows that comprises at least one symbol that does not belong to the first time domain resource.

As one embodiment, whether there is one time window among the K time windows that comprises at least one symbol that does not belong to the first time domain resource is used to determine the first overhead.

As one embodiment, the candidate overhead from the first candidate overhead set that corresponds to the first overhead is related to whether there is one time window among the K time windows that comprises at least one symbol that does not belong to the first time domain resource.

As one embodiment, when each time window among the K time windows belongs to the first time domain resource, the first overhead is the first candidate overhead.

As one embodiment, when one time window among the K time windows comprises at least one symbol that does not belong to the first time domain resource, the first overhead is the second candidate overhead.

As one embodiment, the meaning of the sentence "the first overhead is related to whether there is one time window among the K time windows that overlaps with the first time domain resource" comprises: the first overhead being related to whether there is one time window among the K time windows that is orthogonal to the first time domain resource.

As one embodiment, the first overhead depends on whether there is one time window among the K time windows that is orthogonal to the first time domain resource.

As one embodiment, whether there is one time window among the K time windows that is orthogonal to the first time domain resource is used to determine the first overhead.

As one embodiment, the candidate overhead from the first candidate overhead set that corresponds to the first overhead is related to whether there is one time window among the K time windows is orthogonal to the first time domain resource.

As one embodiment, when each time window among the K time windows overlaps with the first time domain resource, the first overhead is the first candidate overhead.

As one embodiment, when at least one time window among the K time windows is orthogonal to the first time domain resource, the first overhead is the second candidate overhead.

As one embodiment, when each time window among the K time windows overlaps with the first time domain resource, the first overhead is the first candidate overhead; when each time window among the K time windows is orthogonal to the first time domain resource, the first overhead is the second candidate overhead; and when there is one time window among the K time windows that overlaps with the first time domain resource and one time window that is orthogonal to the first time domain resource, the first overhead is the third candidate overhead.

As one embodiment, when each time window among the K time windows belongs to the first time domain resource, the first overhead is the first candidate overhead; when each time window among the K time windows comprises at least one symbol that does not belong to the first time domain resource, the first overhead is the second candidate overhead; and when there is one time window among the K time windows that belongs to the first time domain resource and another time window that comprises at least one symbol that does not belong to the first time domain resource, the first overhead is the third candidate overhead.

**Embodiment 20**

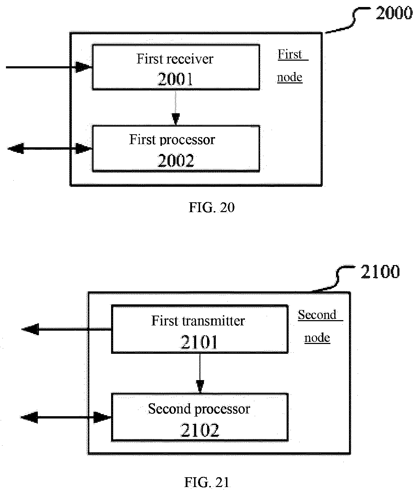

Embodiment 20 exemplifies a structural block diagram of a processing apparatus for use in a first node, according to one embodiment of the present application; as shown in FIG. 20. In FIG. 20, a processing apparatus 2000 in the first node comprises a first receiver 2001 and a first processor 2002.

In Embodiment 20, the first receiver 2001 receives the first information block and the first signaling; the first processor 2002 receives the first signal in the first time window, or sends the first signal in the first time window.

In Embodiment 20, the first information block is used to determine the first time domain resource, and the first signaling comprises scheduling information for the first signal; the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

As one embodiment, the first information block configures the symbols in the first time domain resource as the first type.

As one embodiment, the first overhead is one of the candidate overheads in the first candidate overhead set, where the first candidate overhead set comprises at least a first candidate overhead and a second candidate overhead; the candidate overhead from the first candidate overhead set that corresponds to the first overhead is related to whether the first time window overlaps with the first time domain resource.

As one embodiment, the first receiver 2001 receives a second information block; wherein the second information block is used to determine the first candidate overhead set.

As one embodiment, the first overhead and the number of symbols assigned to the first signal are jointly used to determine a first integer, and the first integer and the number of RBs assigned to the first signal are jointly used to determine a first value, which is used to determine the first TBS.

As one embodiment, the first processor 2002 respectively receives (K-1) signals in (K-1) time windows, or respectively sends (K-1) signals in (K-1) time windows; wherein, the first signaling is used to determine K time windows, where K is a positive integer greater than 1; the first time window is one of the K time windows, and the (K-1) time windows are all the time windows among the K time windows except for the first time window; the K signals consist of the (K-1) signals and the first signal, with each of the K signals carrying the first TB; the first overhead is related to whether there is one time window among the K time windows that overlaps with the first time domain resource.

As one embodiment, the first node is a user equipment.

As one embodiment, the first node is a relay node equipment.

As one embodiment, the first signaling comprises DCI; the sender of the first signaling simultaneously receives and sends wireless signals in the first time domain resource.

As one embodiment, when each symbol in the first time window belongs to the first time domain resource, the first overhead is the first candidate overhead; when at least one symbol in the first time window does not belong to the first time domain resource, the first overhead is the second candidate overhead.

As one embodiment, when at least one symbol in the first time window belongs to the first time domain resource, the first overhead is the first candidate overhead; when the first time window and the first time domain resource are mutually orthogonal, the first overhead is the second candidate overhead.

As one embodiment, the first receiver 2001 comprises at least one of {the antenna 452, the receiver 454, the receiving processor 456, the multi-antenna receiving processor 458, the controller/processor 459, the memory 460, the data source 467} in Embodiment 4.

As one embodiment, the first processor 2002 comprises at least one of {the antenna 452, the transmitter/receiver 454, the transmitting processor 468, the receiving processor 456, the multi-antenna transmitting processor 457, the multi-antenna receiving processor 458, the controller/processor 459, the memory 460, the data source 467} in Embodiment 4.

**Embodiment 21**

Embodiment 21 exemplifies a structural block diagram of a processing apparatus for use in a second node according to one embodiment of the present application; as shown in FIG. 21. In FIG. 21, a processing apparatus 2100 in the second node comprises a first transmitter 2101 and a second processor 2102.

In Embodiment 21, the first transmitter 2101 sends the first information block and the first signaling; the second processor 2102 sends the first signal in the first time window, or receives the first signal in the first time window.

In Embodiment 21, the first information block is used to determine the first time domain resource, and the first signaling comprises scheduling information for the first signal; the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

As one embodiment, the first information block configures the symbols in the first time domain resource as the first type.

As one embodiment, the first overhead is one of the candidate overheads in the first candidate overhead set, where the first candidate overhead set comprises at least a first candidate overhead and a second candidate overhead; the candidate overhead from the first candidate overhead set that corresponds to the first overhead is related to whether the first time window overlaps with the first time domain resource.

As one embodiment, the first transmitter 2101 sends a second information block; wherein the second information block is used to determine the first candidate overhead set.

As one embodiment, the first overhead and the number of symbols assigned to the first signal are jointly used to determine a first integer, and the first integer and the number of RBs assigned to the first signal are jointly used to determine a first value, which is used to determine the first TBS.

As one embodiment, the second processor 2102 respectively sends (K-1) signals in (K-1) time windows, or respectively receives (K-1) signals in (K-1) time windows; wherein, the first signaling is used to determine K time windows, where K is a positive integer greater than 1; the first time window is one of the K time windows, and the (K-1) time windows are all the time windows among the K time windows except for the first time window; the K signals consist of the (K-1) signals and the first signal, with each of the K signals carrying the first TB; the first overhead is related to whether there is one time window among the K time windows that overlaps with the first time domain resource.

As one embodiment, the second node is a base station equipment.

As one embodiment, the second node is a user equipment.

As one embodiment, the second node is a relay node equipment.

As one embodiment, the first signaling comprises DCI; the second node simultaneously receives and sends wireless signals in the first time domain resource.

As one embodiment, when each symbol in the first time window belongs to the first time domain resource, the first overhead is the first candidate overhead; when at least one symbol in the first time window does not belong to the first time domain resource, the first overhead is the second candidate overhead.

As one embodiment, when at least one symbol in the first time window belongs to the first time domain resource, the first overhead is the first candidate overhead; when the first time window and the first time domain resource are mutually orthogonal, the first overhead is the second candidate overhead.

As one embodiment, the first transmitter 2101 comprises at least one of {the antenna 420, the transmitter 418, the transmitting processor 416, the multi-antenna transmitting processor 471, the controller/processor 475, the memory 476} in Embodiment 4.

As one embodiment, the second processor 2102 comprises at least one of {the antenna 420, the transmitter/-receiver 418, the transmitting processor 416, the receiving processor 470, the multi-antenna transmitting processor 471, the multi-antenna receiving processor 472, the controller/processor 475, the memory 476} in Embodiment 4.

Those of ordinary skill in the art may understand that all or part of the steps in the methods described above may be accomplished by instructing relevant hardware through a program that may be stored in computer-readable storage media, such as read only memory, hard disk, or optical disk. Optionally, the steps of the embodiments described above, in whole or in part, may also be implemented using one or a plurality of integrated circuits. Accordingly, the various module units in the embodiments described above may be implemented in the form of hardware or in the form of software function modules. The present application is not limited to the combination of software and hardware of any particular form. The user equipment, terminals, and UEs in the present application include but are not limited to drones, communication modules on drones, radio-controlled aircraft, aircraft, small aircraft, mobile phones, tablets, notebooks, in-vehicle communication devices, means of transportation, vehicles, RSUs, wireless sensors, Internet cards, IoT terminals, RFID terminals, NB-IOT terminals, MTC (Machine Type Communication) terminals, eMTC (enhanced MTC) terminals, data cards, Internet cards, in-vehicle communication devices, low-cost mobile phones, low-cost tablets, and other wireless communication devices. The base stations or system equipment in the present application include, but are not limited to, macrocell base stations, microcell base stations, small cell base stations, femtocell base stations, relay base stations, eNBs, gNBs, TRPs (Transmission-Reception Points), GNSS, relay satellites, satellite base stations, air base stations, RSUs (Road Side Units), unmanned aerial vehicles, and test equipment, such as transceivers or signaling testers that simulate certain base station functions, as well as other wireless communication devices.

It will be appreciated by those ordinary skill in the art that the present disclosure may be implemented in other specified forms that do not deviate from the core or essential features thereof. Thus, the presently disclosed embodiments should in any event be considered descriptive rather than limiting. The scope of the invention is determined by the appended claims, not by the preceding description, and all changes within their equivalent meaning and area are considered to be included therein.

## Claims

1. A first node for wireless communication, **characterized in that**, the node comprises:

   a first receiver receiving a first information block and first signaling, where the first information block is used to determine the first time domain resource, and the first signal comprises scheduling information for a first signal;
   a first processor receiving the first signal **in** a first time window, or sending the first signal **in** a first time window;
   wherein, the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

2. The first node according to Claim 1, **characterized in that** the first information block configures a symbol **in** the first time domain resource as a first type.

3. The first node according to Claims 1 or 2, **characterized in that** the first overhead is one of the candidate overheads in a first candidate overhead set, where the first candidate overhead set comprises at least a first candidate overhead and a second candidate overhead; the candidate overhead from the first candidate overhead set that corresponds to the first overhead is related to whether the first time window overlaps with the first time domain resource.

4. The first node according to Claim 3, **characterized in that** the first receiver receives a second information block; wherein the second information block is used to determine the first candidate overhead set.

5. The first node according to any one of Claims 1 to 4, **characterized in that** the first overhead and the number of symbols assigned to the first signal are jointly used to determine a first integer, and the first integer and the number of RBs assigned to the first signal are jointly used to determine a first value, which is used to determine the first TBS.

6. The first node according to any one of Claims 1 to 5, **characterized in that** the first processor respectively receives (K-1) signals in (K-1) time windows, or respectively sends (K-1) signals in (K-1) time windows; wherein, the first signaling is used to determine K time windows, where K is a positive integer greater than 1; the first time window is one of the K time windows, and the (K-1) time windows are all the time windows among the K time windows except for the first time window; the K signals consist of the (K-1) signals and the first signal, with each of the K signals carrying the first TB; the first overhead is related to whether there is one time window among the K time windows that overlaps with the first time domain resource.

7. A second node used in wireless communication, **characterized in that**, the node comprises:

   a first transmitter sending a first information block and first signaling, where the first information block is used to determine the first time domain resource, and the first signaling comprises scheduling information for a first signal;
   a second processor sending the first signal in a first time window, or receiving the first signal in a first time window;
   wherein, the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

8. The second node according to Claim 7, **characterized in that** the first information block configures a symbol in the first time domain resource as a first type.

9. The second node according to Claims 7 or 8, **characterized in that** the first overhead is one of the candidate overheads in a first candidate overhead set, where the first candidate overhead set comprises at least a first candidate overhead and a second candidate overhead; the candidate overhead from the first candidate overhead set that corresponds to the first overhead is related to whether the first time window overlaps with the first time domain resource.

10. The second node according to Claim 9, **characterized in that** the first transmitter sends a second information block; wherein the second information block is used to determine the first candidate overhead set.

11. The second node according to any one of Claims 7 to 10, **characterized in that** the first overhead and the number of symbols assigned to the first signal are jointly used to determine a first integer, and the first integer and the number of RBs assigned to the first signal are jointly used to determine a first value, which is used to determine the first TBS.

12. The second node according to any one of Claims 7 to 11, **characterized in that** the second processor respectively sends (K-1) signals in (K-1) time windows, or respectively receives (K-1) signals in (K-1) time windows; wherein, the first signaling is used to determine K time windows, where K is a positive integer greater than 1; the first time window is one of the K time windows, and the (K-1) time windows are all the time windows among the K time windows except for the first time window; the K signals consist of the (K-1) signals and the first signal, with each of the K signals carrying the first TB; the first overhead is related to whether there is one time window among the K time windows that overlaps with the first time domain resource.

13. A method used in a first node for wireless communication, **characterized in that**, the method comprises:

   receiving a first information block and first signaling, where the first information block is used to determine the first time domain resource, and the first signal comprises scheduling information for a first signal;
   receiving the first signal in a first time window, or sending the first signal in a first time window;
   wherein, the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

14. The method according to Claim 13, **characterized in that** the first information block configures a symbol in the first time domain resource as a first type.

15. The method according to Claims 13 or 14, **characterized in that** the first overhead is one of the candidate overheads in a first candidate overhead set, where the first candidate overhead set comprises at least a first candidate overhead and a second candidate overhead; the candidate overhead from the first candidate overhead set that corresponds to the first overhead is related to whether the first time window overlaps with the first time domain resource.

16. The method according to Claim 15, **characterized in that** it comprises:

   receiving a second information block;
   wherein the second information block is used to determine the first candidate overhead set.

17. The method according to any one of Claims 13 to 16, **characterized in that** the first overhead and the number of symbols assigned to the first signal are jointly used to determine a first integer, and the first integer and the number of RBs assigned to the first signal are jointly used to determine a first value, which is used to determine the first TBS.

18. The method according to any one of Claims 13 to 17, **characterized in that** it comprises:

   receiving (K-1) signals in (K-1) time windows, or sending (K-1) signals in (K-1) time windows;

wherein the first signaling is used to determine K time windows, where K is a positive integer greater than 1; the first time window is one of the K time windows, and the (K-1) time windows are all the time windows among the K time windows except for the first time window; the K signals consist of the (K-1) signals and the first signal, with each of the K signals carrying the first TB; the first overhead is related to whether there is one time window among the K time windows that overlaps with the first time domain resource.

19. A method used in a second node for wireless communication, **characterized in that**, the method comprises:

sending a first information block and first signaling, where the first information block is used to determine the first time domain resource, and the first signal comprises scheduling information for a first signal;
sending the first signal in a first time window, or receiving the first signal in a first time window;
wherein, the first time domain resource comprises at least one symbol, and the first time window comprises at least one symbol; the first signal carries a first TB; the size of the first TB is the first TBS, with the first overhead being used to determine the first TBS, and the first overhead being related to whether the first time window overlaps with the first time domain resource.

20. The method according to Claim 19, **characterized in that** the first information block configures a symbol in the first time domain resource as a first type.

21. The method according to Claims 19 or 20, **characterized in that** the first overhead is one of the candidate overheads in a first candidate overhead set, where the first candidate overhead set comprises at least a first candidate overhead and a second candidate overhead; the candidate overhead from the first candidate overhead set that corresponds to the first overhead is related to whether the first time window overlaps with the first time domain resource.

22. The method according to Claim 21, **characterized in that** it comprises:

sending a second information block;
wherein the second information block is used to determine the first candidate overhead set.

23. The method according to any one of Claims 19 to 22, **characterized in that** the first overhead and the number of symbols assigned to the first signal are jointly used to determine a first integer, and the first integer and the number of RBs assigned to the first signal are jointly used to determine a first value, which is used to determine the first TBS.

24. The method according to any one of Claims 19 to 23, **characterized in that** it comprises:

sending (K-1) signals in (K-1) time windows, or receiving (K-1) signals in (K-1) time windows;
wherein the first signaling is used to determine K time windows, where K is a positive integer greater than 1; the first time window is one of the K time windows, and the (K-1) time windows are all the time windows among the K time windows except for the first time window; the K signals consist of the (K-1) signals and the first signal, with each of the K signals carrying the first TB; the first overhead is related to whether there is one time window among the K time windows that overlaps with the first time domain resource.

FIG. 1

FIG. 2

FIG. 3

FIG. 4

FIG. 5

U3. Second node

S631.Sends the first information block

First information block

S641.Receives the first information block

S6301.Sends the second information block

Second information block

S6401.Receives the second information block

U4. First node

F61. Optional

S632.Sends the first signaling

First signaling

S642.Receives the first signaling

S643.Sends the first signal

First signal

S633.Receives the first signal

S6402.Respectively sends (K-1) signals in (K-1) time windows

(K-1) signals

F62. Optional

S6302.Respectively receives (K-1) signals in (K-1) time windows

End

End

FIG. 6

Configuration

First information block ──────▶ The symbols in the first time domain resource as the first type

FIG. 7

Used to determine

First information block ──────▶ Second time domain resource

FIG. 8

The candidate overhead from the first candidate overhead set that corresponds to the first overhead

◀── Related ──▶

Whether the first time window overlaps with the first time domain resource

FIG. 9

Whether the first overhead is the first candidate overhead or the second candidate overhead

◀── Related ──▶

Whether the first time window overlaps with the first time domain resource

FIG. 10

Whether the first overhead belongs to the first candidate overhead subset or the second candidate overhead subset

◀── Related ──▶

Whether the first time window overlaps with the first time domain resource

FIG. 11

Whether the first overhead is the first candidate overhead, the second candidate overhead, or the third candidate overhead ◄——Related——► Whether the first time window overlaps with the first time domain resource

FIG. 12

Second information block ——Used to determine——► First candidate overhead set

FIG. 13

First overhead

Number of symbols assigned to the first signal } ——Used to determine——► First integer

FIG. 14

First integer

Number of RBs assigned to the first signal } ——Used to determine——► First value

FIG. 15

First value ——Used to determine——► First TBS

FIG. 16

| Time window #0 | | Time window #(K-1) |
|---|---|---|
| Signal #0 | · · · | Signal #(K-1) |

FIG. 17

First signaling ——Used to determine——► First time window

FIG. 18

First overhead ◄——Related——► Whether there is one time window among the K time windows that overlaps with the first time domain resource

FIG. 19

2000

First node

First receiver
2001

First processor
2002

FIG. 20

2100

Second node

First transmitter
2101

Second processor
2102

FIG. 21

## INTERNATIONAL SEARCH REPORT

| International application No. |
| --- |
| **PCT/CN2023/115996** |

| A. | CLASSIFICATION OF SUBJECT MATTER |
| --- | --- |

H04W 72/0446(2023.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXTC, ENTXT, VEN, 3GPP: 信息块, 信令, 下行控制信息, 时域资源, 时间窗, 传输块, 大小, 尺寸, 交叠, 重叠, 开销, 非重叠, 全双工, DCI, RRC, MAC CE, time, domain, slot, symbol, window, TB, TBS, size, overlap, overhead, full duplex, SBFD

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113597014 A (SHANGHAI LANGBO COMMUNICATION TECHNOLOGY CO., LTD.) 02 November 2021 (2021-11-02) claims 1-10, and description, paragraphs 73-186 and 214-652 | 1-24 |
| A | WO 2020156246 A1 (SHANGHAI LANGBO COMMUNICATION TECHNOLOGY CO., LTD.) 06 August 2020 (2020-08-06) entire document | 1-24 |
| A | CN 110971368 A (HUAWEI TECHNOLOGIES CO., LTD.) 07 April 2020 (2020-04-07) entire document | 1-24 |
| A | CN 108282879 A (ZTE CORP.) 13 July 2018 (2018-07-13) entire document | 1-24 |
| A | CMCC. "Discussion on Subband Non-Overlapping Full Duplex" *3GPP TSG RAN WG1 #109-e R1-2204304*, 20 May 2022 (2022-05-20), entire document | 1-24 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 November 2023** | **22 November 2023** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115996**

| Patent document cited in search report | | | Publication date (day/month/year) | Patent family member(s) | | | Publication date (day/month/year) |
|---|---|---|---|---|---|---|---|
| CN | 113597014 | A | 02 November 2021 | None | | | |
| WO | 2020156246 | A1 | 06 August 2020 | CN | 111526589 | A | 11 August 2020 |
| | | | | CN | 114826533 | A | 29 July 2022 |
| | | | | CN | 114866205 | A | 05 August 2022 |
| CN | 110971368 | A | 07 April 2020 | WO | 2020063193 | A1 | 02 April 2020 |
| | | | | US | 2021219277 | A1 | 15 July 2021 |
| | | | | EP | 3843305 | A1 | 30 June 2021 |
| | | | | VN | 78529 | A | 25 June 2021 |
| | | | | IN | 202137016000 | A | 30 July 2021 |
| CN | 108282879 | A | 13 July 2018 | EP | 3567947 | A1 | 13 November 2019 |
| | | | | US | 2022095310 | A1 | 24 March 2022 |
| | | | | US | 2019357224 | A1 | 21 November 2019 |
| | | | | WO | 2018126932 | A1 | 12 July 2018 |
| | | | | CN | 115884403 | A | 31 March 2023 |

Form PCT/ISA/210 (patent family annex) (July 2022)